# EUROPÄISCHE PATENTSCHRIFT

(11) **EP 2 132 284 B1**
(45) Veröffentlichungstag und Bekanntmachung des Hinweises auf die Patenterteilung: **01.12.2010**
(21) Anmeldenummer: 08717233.4
(22) Anmeldetag: 28.02.2008
(51) Int. Cl.: C10L 1/14, C10L 1/24, C10M 161/00

(54) **ZUR ANTISTATIKAUSRÜSTUNG UND VERBESSERUNG DER ELEKTRISCHEN LEITFÄHIGKEIT VON UNBELEBTEM ORGANISCHEN MATERIAL GEEIGNETE ADDITIVFORMULIERUNG**
ADDITIVE FORMULATION SUITED FOR ANTI-STATIC FINISHING AND IMPROVEMENT OF THE ELECTRICAL CONDUCTIVITY OF INANIMATE ORGANIC MATERIAL
FORMULATION ADDITIVE SERVANT AU TRAITEMENT ANTISTATIQUE ET À L'AMÉLIORATION DE LA CONDUCTIVITÉ ÉLECTRIQUE DE MATIÈRE ORGANIQUE INANIMÉE

(30) Priorität: 02.03.2007 EP 07103421
(43) Veröffentlichungstag der Anmeldung: 16.12.2009
(73) Patentinhaber: BASF SE, 67056 Ludwigshafen (DE)
(72) Erfinder: POSSELT, Dietmar, 69120 Heidelberg (DE); MÄHLING, Frank-Olaf, 68165 Mannheim (DE); LANGE, Arno, 67098 Bad Dürkheim (DE); VINCKIER, Anja, B-2000 Antwerpen (BE); KORMANN, Claudius, 67105 Schifferstadt (DE)
(86) Internationale Anmeldenummer: PCT/EP2008/052451
(87) Internationale Veröffentlichungsnummer: WO 2008/107371

(56) Entgegenhaltungen:
- EP-A- 1 568 756
- EP-A- 1 749 874
- EP-B- 1 274 819
- US-A- 3 917 466
- SANDLER ET AL: "Chapter 1. Olefin-Sulfur Dioxide Copolymers" POLYMER SYNTHESES. VOLUME 3, ACADEMIC PRESS, Bd. 3, 1. Januar 1980 (1980-01-01), Seiten 1-41, XP009106384 ISBN: 978-0-12-618503-4

## Beschreibung

Die vorliegende Erfindung betrifft eine neue und verbesserte Additivformulierung, die zur Antistatikausrüstung und Verbesserung der elektrischen Leitfähigkeit von unbelebtem organischen Material sowie zur Verhinderung von elektrostatischer Aufladung bei chemischen und physikalischen Verfahren geeignet ist. Weiterhin betrifft die vorliegende Erfindung ein Verfahren zur Herstellung dieser Additivformulierung. Weiterhin betrifft die vorliegenden Erfindung die Verwendung dieser Additivformulierung und hiermit antistatisch ausgerüstetes unbelebtes organisches Material.

Unbelebtes organisches Material, beispielsweise ein Kraftstoff, ist in der Regel ein sehr schlechter elektrischer Leiter. Daher neigen elektrische Ladungen gem dazu, sich in solchem organischen Material lokal anzusammeln und unkontrolliert als Funken zu entladen, was zu Explosionen oder Bränden bei Kontakt dieses organischen Materials, welches meist brennbar und oft leichtentzündlich ist, mit Luft oder Sauerstoff führen kann. Durch geeignete Antistatikzusätze lässt sich die elektrische Leitfähigkeit von unbelebtem organischen Material erhöhen, so dass sich keine statischen Aufladungen mehr bilden können und das Risiko von Explosionen und Bränden verringert wird.

Aus der US-A 3 917 466 (1) sind Additivformulierungen zur Antistatikausrüstung und Verbesserung der elektrischen Leitfähigkeit bekannt, die aus Olefin-Schwefeldioxid-Copolymeren, polymeren Polyaminen, welche durch Umsetzung von Epichlorhydrin mit aliphatischen Monoaminen oder Polyaminen, beispielsweise N-Talgfett-1,3-diaminopropan, erhältlich sind, öllöslichen Sulfonsäuren und niedrigsiedenden Lösungsmitteln wie Toluol und/oder Isopropanol bestehen.

In der US-A 4 416 668 (2) werden Mischungen aus α-Olefin-Maleinsäureimid-Copolymeren und Olefin-Schwefeldioxid-Copolymeren als Antistatikmittel für organische Flüssigkeiten wie Kraftstoffe beschrieben. Diese Mischungen können Lösungsmittel wie Benzol, Toluol oder Xylole enthalten.

In der EP-A 1 568 756 wird eine Additivformulierung zur Verbesserung der Leitfähigkeit von Treibstoffen unter dem Handelsnamen Stadis 450 beschrieben, welche 13,3 % eines 1-Decen-Polysulfons, 13,3 % eines Umsetzungsproduktes von N-Talgfett-1,3-propylendiamin mit Epichlorhydrin, 7,4 % Dodecylbenzolsulfonsäure und 66 % Toluol enthält.

In der EP-B 1 274 819 wird eine Antistatikformulierung für Treibstoffe beschrieben, welche ein 1-Decen-Schwefeldioxid-Copolymer, Tetramine T, Dodecylbenzolsulfonsäure und Solvent 14 enthält.

In der EP-A 1 749 874 wird eine Antistatikformulierung für Treibstoffe beschrieben, welche Polysulfone und Alkylphenol-Aldehydharze enthält.

Die Wirkung der im Stand der Technik beschriebenen Antistatikmittel ist jedoch noch nicht befriedigend. Es besteht Bedarf nach einer noch effektiveren und nachhaltigeren Erhöhung der elektrischen Leitfähigkeit in unbelebtem organischen Material. Weiterhin sollen die Antistatikmittel ein noch höhere thermische Stabilität aufweisen. Aus Toxizitäts- und Umweltgründen sollen sie möglichst metall- und halogenfrei sein. Nicht zuletzt sollen sie einen möglichst hohen Flammpunkt aufweisen, damit sie bei ihrer Herstellung, ihrem Transport und ihrer Lagerung vor ihrem Einsatz im unbelebten organischen Material sicher, d.h. ohne Explosions- und Brandrisiko, gehandhabt werden können.

Es bestand daher die Aufgabe, unter Toxizitäts- und Umweltgesichtspunkten unbedenkliche Antistatikmittel zur Erhöhung der elektrischen Leitfähigkeit in unbelebtem organischen Material, insbesondere in Kraftstoffen und Mineralölprodukten, mit einer effektiven Wirkung, einer hohen thermischen Stabilität und einem möglichst hohen Flammpunkt bereitzustellen.

Demgemäß wurde eine Additivformulierung gefunden, die zur Antistatikausrüstung und Verbesserung der elektrischen Leitfähigkeit von unbelebtem organischen Material geeignet ist und aus
(A) 1 bis 50 Gew.-% eines Olefiin-Schwefeldioxid-Copolymers,
(B) 1 bis 50 Gew.-% einer ein oder mehrere basische Stickstoffatome enthaltenden Verbindung, welche mindestens einen längerkettigen linearen oder verzweigten Kohlenwasserstoffrest mit mindestens 4 Kohlenstoffatomen oder ein äquivalentes Strukturelement, welches die Löslichkeit der Komponente (B) im unbelebten organischen Material gewährleistet, aufweist und ein α-Olefin-Maleinsäureimid-Copolymer mit mindestens einem basischen Stickstoffatom ist,
(C) 0,1 bis 30 Gew.-% einer öllöslichen Säure und
(D) 1 bis 80 Gew.-% eines hochsiedenden organischen Lösungsmittels, welches aus einer oder mehreren Molekülsorten besteht, wobei mindestens 80 Gew.-% dieser Molekülsorten einen Siedepunkt von mehr als 154°C bei Normaldruck aufweisen,
besteht, wobei die Summe aller Komponenten (einschließlich möglicherweise vorhandener Nebenkomponenten und/oder nicht störender Verunreinigungen) 100 Gew.-% ergibt.

Die erfindungsgemäße Additivformulierung kann - meist herstellungsbedingt - als Nebenkomponenten und/oder nicht störende Verunreinigungen noch bis 10 Gew.-%, insbesondere bis zu 5 Gew.-%, vor allem bis zu 2 Gew.-%, weitere Inhaltsstoffe enthalten.

In einer bevorzugten Ausführungsform besteht die erfindungsgemäße Additivformulierung aus
(A) 10 bis 30 Gew.-%, insbesondere 13 bis 25 Gew.-%, der Komponente (A),
(B) 10 bis 30 Gew.-%, insbesondere 13 bis 25 Gew.%, der Komponente (B),
(C) 2 bis 15 Gew.-%, insbesondere 4 bis 10 Gew.-%, der Komponente (C) und
(D) 40 bis 78 Gew.-%, insbesondere 50 bis 70 Gew.-%, der Komponente (D).

Die beschriebene erfindungsgemäße Addivformulierung stellt ein Konzentrat der eigentlichen Wirkkomponenten (A), (B) und (C) in hochsiedenden organischen Lösungsmittel (D) dar, welches für den sicheren Transport und die sichere Lagerung der Ware bestens geeignet ist.

Die Struktur und die bekannten Herstellverfahren für das Olefin-Schwefeldioxid-Copolymer der Komponente (A) sind in den Schriften (1) und (2) beschrieben. Die Komponente (A) ist vorzugsweise ein Copolymer des Schwefeldioxids mit einem oder mehreren linearen oder verzweigten 1-Olefinen mit 2 bis 24 Kohlenstoffatomen. Üblicherweise handelt es sich bei den Copolymeren (Polysulfonen) der Komponente (A) um alternierenden 1:1-Copolymere, in denen in der Regel eine Sulfon-Einheit auf eine Olefin-Einheit folgt; in geringen Mengen können auch Sequenzen aus zwei oder mehr Olefin-Einheiten auftreten. Ein Teil der Olefnmonomere kann durch ethylenisch ungesättigte Carbonsäuren (z.B. Acrylsäure, Methacrylsäure oder Vinylessigsäure) oder ethylenisch ungesättigte Dicarbonsäuren (z.B. Maleinsäure oder Fumarsäure) oder Derivate hiervon (z.B. Maleinsäureanhydrid) ersetzt sein, so dass das Copolymer der Komponente (A) insbesondere aus 50 mol-% Schwefeldioxid-bzw. Sulfon-Einheiten, 40 bis 50 mol-% Olefin-Einheiten und 0 bis 10 mol-% Einheiten aus den genannten ethylenisch ungesättigten Carbonsäuren, ethylenisch ungesättigten Dicarbonsäuren oder Derivaten hiervon aufgebaut ist.

Als verzweigte und insbesondere lineare 1-Olefine mit 2 bis 24 Kohlenstoffatomen zur Herstellung der Komponente (A) kommen beispielsweise Ethen, Propen, 1-Buten, 2-Buten, Isobuten, 1-Penten, 1-Hexen, 1-Hepten, 1-Octen, 1-Nonen, 1-Decen, 1-Undecen, 1-Dodecen, 1-Tridecen, 1-Tetradecen, 1-Pentadecen, 1-Hexadecen, 1-Heptadecen, 1-Octadecen, 1-Nonadecen, 1-Eicosen, 1-Heneicosen, 1-Docosen, 1-Tricosen, 1-Tetracosen oder Mischungen hieraus in Betracht. Besonders bevorzugt werden lineare 1-Olefine mit 6 bis 16, insbesondere mit 8 bis 14 Kohlenstoffatomen, oder lineare 1-Olefine mit 12 bis 22, insbesondere 14 bis 20 Kohlenstoffatomen, sowie Mischungen hieraus, beispielsweise eine Mischung aus 1-Dodecen und 1-Tetradecen. Es kann auch vorteilhaft sein, Mischungen aus nieder- und höhennolekularen 1-Olefinen, d.h. 1-Olefingemische mit einer bimodalen Verteilung, zur Herstellung der Komponente (A) einzusetzen, beispielsweise Mischungen aus 1-Olefinen mit 6 bis 13 Kohlenstoffatomen und 1-Olefinen mit 14 bis 20 Kohlenstoffatomen oder Mischungen aus 1-Olefinen mit 6 bis 10 Kohlenstoffatomen und 1-Olefinen mit 11 bis 15 Kohlenstoffatomen oder Mischungen aus 1-Olefinen mit 2 bis 24 Kohlenstoffatomen und einem einzelnen 1-Olefin mit 4 bis 10 Kohlenstoffatomen. Wenn technische oder sonstige 1-OlefinGemische eingesetzt werden, bezieht sich die Angabe der Kohlenstoffatome bei den oben angegebenen Bereichen auf die mittlere Kohlenstoffatom-Anzahl dieser Gemische, wobei die mittlere Kohlenstoffatom-Anzahl die Summe über die mathematischen Produkte aus Gewichtsbruchteil und zugehöriger Kohlenstoffatom-Anzahl aller im Gemisch vorhandenen 1-Olefine darstellt.

Das Olefin-Schwefeldioxid-Copolymer der Komponente (A) weist typischerweise ein zahlengemittelies Molekulargewicht Mₙ von 2.000 bis 1.000.000, insbesondere von 4.000 bis 100.000, vor allem von 6.000 bis 25.000, auf. Die Polydispersität (PDI = M_{w}/Mₙ) liegt in der Regel im Bereich von 1,1 bis 30, insbesondere von 1,5 bis 20, vor allem von 2 bis 10, ganz besonders bevorzugt von 2,3 bis 5.

In der Schrift (1) wird die Herstellung der Olefin-Schwefeldioxid-Copolymere durch ein geeignetes radikalisches Polymerisationsverfahren im Temperaturbereich von 0 bis 50°C empfohlen, als einzusetzende Lösungsmittel werden Benzol, Toluol oder Xylol genannt; es wird mit einem nur geringen molaren Überschuß an Schwefeldioxid (maximal die 1,5-fache molare Menge) gearbeitet; es werden Radikalstarter wie Peroxide oder Azoverbindungen und die zusätzliche Bestrahlung mit aktinischem Licht empfohlen. Gemäß der Schrift (2) kann man die Olefin-Schwefeldioxid-Copolymere durch Emulsionspolymerisationsverfahren in wässrigem Medium herstellen.

Die ein oder mehrere basische Stickstoffatome enthaltende Verbindung der Komponente (B) muß im mit der erfindungsgemäßen Additivformulierung zu behandelnden unbelebten organischen Material löslich, zumindest jedoch homogen verteilbar, sein. Die Komponente (B) ist ebenfalls ein Polymer. Es weist mindestens einen längerkettigen verzweigten oder insbesondere linearen Kohlenwasserstoffrest mit mindestens 4, vorzugsweise mit mindestens 8, insbesondere mit mindestens 12, vor allem mit 12 bis 30 Kohlenstoffatomen, auf, sofern nicht ein äquivalentes Strukturelement die Löslichkeit im unbelebten organischen Material gewährleistet. Die Verbindung der Komponente (B) enthält vorzugsweise keine freien Hydroxylgruppen, weil diese unter Umständen die Wirksamkeit der erfindungsgemäßen Additivformulierung beeinträchtigen könnten.

Bei der Verbindung der Komponente (B) kann der genannte längerkettige verzweigte oder lineare Kohlenwasserstoffrest an dem oder an einem der basischen Stickstoffatome oder an einem Kohlenstoffatom, insbesondere an einem Kohlenstoffatom der Polymerhauptkette, sitzen. Typische längerkettige verzweigte oder lineare Kohlenwasserstoffreste sind beispielsweise lineare Alkylreste, wie sie in Fettsäuren vorkommen, und Polyisobutylreste, insbesondere solche mit 20 bis 150, vor allem 35 bis 100 Kohlenstoffatomen.

Die Struktur und das Herstellverfahren für die α-Olefin-Maleinsäureimid-Copolymere mit mindestens einem basischen Stickstoffatom der Komponente (B) sind im Prinzip in der Schrift (2) beschrieben. In einer bevorzugten Ausführungsform sind diese α-Olefin-Maleinsäureimid-Copolymere durch radikalische Polymerisation von einem oder mehreren linearen oder verzweigten α-Olefinen mit 6 bis 50 Kohlenstoffatomen mit Maleinsäureanhydrid und anschließende Umsetzung mit einem oder mehreren aliphatischen Polyaminen erhältlich. Die α-Olefin-Maleinsäureanhydrid-Copolymere und die daraus hergestellten α-Olefin-Maleinsäureimid-Copolymere sind üblicherweise in der Polymerhauptkette alternierende 1:1-Copolymere, in denen eine Maleinsäure-Einheit stets auf eine α-Olefin-Einheit folgt. Durch die längerkettigen verzweigten oder linearen Kohlenwasserstoffreste entstehen in der Regel Kammstrukturen.

Als verzweigte und insbesondere lineare 1 -Olefine mit 6 bis 50 Kohlenstoffatomen zur Herstellung der α-Olefin-Maleinsäureimid-Copolymere der Komponente (B) kommen beispielsweise 1-Hexen, 1-Hepten, 1-Octen, 1-Nonen, 1-Decen, 1-Undecen, 1-Dodecen, 1-Tridecen, 1-Tetradecen, 1-Pentadecen, 1-Hexa-decen, 1-Heptadecen, 1-Octadecen. 1-Nonadecen, 1-Eicosen, 1-Heneicosen, 1-Docosen, 1-Tricosen, 1-Tetracosen, 1-Triaconten, 1-Tetraconten, 1-Pentaconten oder Mischungen hieraus in Betracht. Besonders bevorzugt werden lineare 1-Olefine mit 12 bis 30, insbesondere mit 16 bis 24 Kohlenstoffatomen, sowie Mischungen hieraus.

Die radikalische Polymerisation der 1-Olefine mit Maleinsäureanhydrid wird nach den üblichen Methoden durchgeführt. Man verwendet hierzu die üblichen Radikalstarter, insbesondere solche auf Basis von Peroxiden oder Azoverbindungen, beispielsweise Di-tert.-butylperoxid, tert.-Butylperoxypivalat oder Azobisisobutyronitril, arbeitet in den üblichen Temperatur- und Druckbereichen, z.B. bei 50 bis 150°C bei Normaldruck, und führt die Umsetzungen in den üblichen Lösungsmitteln, beispielsweise aromatischen Kohlenwasserstoffen, durch. Vorzugsweise setzt man als Lösungsmittel die hochsiedenden organischen Lösungsmittel der Komponente (D) der vorliegenden Erfindung ein.

Nach erfolgter Polymerisation werden die erhaltenen α-Olefin-Maleinsäureanhydrid-Copolymere mit einem oder mehreren aliphatischen Polyaminen zum entsprechenden Imid umgesetzt. Es werden Polyamine mit einer primären Aminogruppe zur Imidbildung und mindestens einer weiteren primären, sekundären oder tertiären Aminogruppe für das basische Stickstoffatom benötigt. Es eignen sich hierbei beispielsweise kürzerkettige Diamine wie Ethylendiamin, 1,3-Propylendiamin, 3-(N,N-Dimethylamino)-propylamin ("DMAPA") oder Bis[3-(N,N-Dimethylamino)propyl]amin ("Bis-DMAPA") oder längerkettige Diamine wie N-Talgfett-1,3-diaminopropan. Die üblichen Reaktionsbedingungen für diese Imidbildung sind dem Fachmannn bekannt. Werden für diese Imidbildung Lösungsmittel mitverwendet, setzt man vorzugsweise die hochsiedenden organischen Lösungsmittel der Komponente (D) der vorliegenden Erfindung ein.

Typische Beispiele für mit aliphatischen Polyaminen umgesetzte α-Olefin-Maleinsäureanhydrid-Copolymere sind die kammartig aufgebauten Umsetzungsprodukte aus C_{20/24}-α-Olefin-Maleinsäureanhydrid-Copolymeren und 3-(N,N-Dimethylamino)-propylamin ("DMAPA") oder Bis[3-(N,N-Dimethylamino)propyl]amin ("Bis-DMAPA").

Die beschriebenen α-Olefin-Maleinsäureimid-Copolymere mit mindestens einem basischen Stickstoffatom der Komponente (B) weisen typischerweise ein gewichtsgemitteltes Molekulargewicht M_{w} von 500 bis 50.000, insbesondere von 1.000 bis 10.000 auf. Eine typisches α-Olefin-Maleinsäureimid-Copolymer ist ein mit N-Talgfett-1,3-diaminopropan zum Imid umgesetztes α-Olefin-Maleinsäureanhydrid-Copolymer mit einem gewichtsgemitteltes Molekulargewicht M_{w} im Bereich von 1.000 bis 10.000.

Die öllösliche Säure der Komponente (C) ist vorzugsweise ein organische Sulfonsäure, welche zur Erzielung der Öllöslichkeit zweckmäßigerweise einen längerkettigen oder voluminöseren Hydrocarbylrest, insbesondere mit 6 bis 40, vor allem 8 bis 32, besonders bevorzugt mit 10 bis 24 Kohlenstoffatomen, aufweist. Als derartige Hydrocarbylreste eignen sich lineare oder verzweigte Alkyl- oder Alkenylreste, z.B. n-Hexyl, n-Heptyl, n-Octyl, 2-Ethylhexyl, n-Nonyl, n-Decyl, 2-Propylheptyl, n-Undecyl, n-Dodecyl, n-Tridecyl, iso-Tridecyl, n-Tetradecyl, n-Pentadecyl, n-Hexadecyl, n-Heptadecyl, n-Octadecyl, n-Nonadecyl, n-Eicosyl, n-Heneicosyl, n-Docosyl, n-Tricosyl, n-Tetracosyl, Oleyl, Linolyl oder Linolenyl, Cycloalkylreste, z.B. Cyclohexyl, Methylcyclohexyl oder Dimethylcyclohexyl, Arylreste, z.B. Phenyl oder Naphthyl, Aralkylreste, z.B. Benzyl oder 2-Phenylethyl, oder besonders bevorzugt Alkarylreste, insbesondere mit linearen oder verzweigten C₁ bis C₁₈-Atkylgruppen substituiertes Phenyl oder Naphthyl, z.B. Tolyl, Xylyl, n-Nonylphenyl, n-Decylphenyl, n-Dodecylphenyl, iso-Tridecylphenyl, n-Nonylnapthyl, Di-n-nonylnaphthyl, n-Decylnaphthyl, Di-n-decylnaphthyl, n-Dodecylnaphthyl, Di-n-dodecylnaphthyl, iso-Tridecylnaphthyl oder Di-iso-tridecynaphthyl. Bei den letztgenannte monosubstituierten Phenylresten können die Alkylgruppen ortho-, meta- oder para-ständig zur Sulfonsäuregruppe sein, wobei para-Ständigkeit bevorzugt wird. Typische Beispiele für die Komponente (C) sind somit n-Nonylbenzolsulfonsäure, n-Decylbenzolsulfonsäure, n-Dodecylbenzolsulfonsäure, iso-Tridecylbenzolsulfonsäure, n-Nonylnaphthylsulfon-säure, Di-n-nonylnaphthylsulfonsäure, n-Decylnaphthylsulfonsäure, Di-n-decylnaphthyl-sulfonsäure, n-Dodecylnaphthylsulfonsäure, Di-n-dodecylnaphthylsulfonsäure, iso-Tri-decylnaphthylsulfonsäure und Di-iso-tridecylnaphthylsulfonsäure.

Neben den genannten organischen Sulfonsäuren können prinzipiell als Komponente (C) beispielsweise auch öllösliche organische Sulfinsäuren oder organische Phosphonsäuren eingesetzt werden, welche ebenfalls zweckmäßigerweise einen längerkettigen oder voluminöseren Hydrocarbylrest aufweisen, insbesondere einen solchen mit 6 bis 40, vor allem 8 bis 32, besonders bevorzugt mit 10 bis 24 Kohlenstoffatomen.

Das hochsiedende organische Lösungsmittel der Komponente (D) ist zwar keine eigentliche Wirkkomponente in der erfindungsgemäßen Additivformulierung zur Antistatikausrüstung und Verbesserung der Leitfähigkeit von unbelebtem organischen Material, unterstützt und verstärkt jedoch durch seine Wechselwirkung mit den Komponenten (A), (B) und (C) deren Wirkung, trägt zur thermischen Stäbilität der Formulierung bei und sorgt für einen hohen Flammpunkt. Weiterhin dient die Komponente (D) auch zur besseren Einstellbarkeit der gewünschten Viskosität der erfindungsgemäßen Additivformulierung, welche ein wichtiges Kriterium für die Anwendbarkeit dieser Formulierung darstellt.

In einer bevorzugten Ausführungsform besteht die Komponente (D) zu mindestens 80 Gew.-%, vor allem zu mindestens 90 Gew.-%, aus einem hochsiedenden aromatischen Kohlenwasserstoff mit 9 bis 30 Kohlenstoffatomen oder einer Mischung aus solchen hochsiedenden aromatischen Kohlenwasserstoffen. Ganz besonders bevorzugt ist die Komponente (D) zu mindestens 80 Gew.-%, insbesondere zu mindestens 90 Ges.-%, vor allem zu 100 Ges.-%, eine Mischung aus hochsiedenden aromatischen Kohlenwasserstoffen mit 9 bis 20 Kohlenstoffatomen, insbesondere 9 bis 14 Kohlenstoffatomen. Derartige aromatische Kohlenwasserstoffe sind insbesondere zwei-, drei- oder mehrkernige Aromaten, z.B. Naphthalin, Diphenyl, Anthracen oder Phenanthren, oder ein-, zwei-, drei- oder mehrkernige Aromaten mit aliphatischen Seitenketten, beispielsweise substituierte Benzole mit C₇- bis C₁₄-Alkylseitenketten, insbesondere C₇- bis C₁₂-Alkylseitenketten, wie n-Dodecylbenzol oder n-Tetradecylbenzol, vor allem jedoch mit C₁- bis C₆-Alkylseitenketten, z.B. n-Propylbenzol, iso-Propylbenzol, Ethylmethylbenzole, Trimethylbenzole, Ethyl-dimethylbenzole, Diethylbenzole, n-Butylbenzol, iso-Butylbenzol, sec.-Butylbenzol, tert.-Butylbenzol, n-Pentylbenzol, tert.-Pentylbenzol, n-Hexylbenzol, Methylnaphthaline, Dimethylnaphthaline oder C₂- bis C₆-Alkylnaphthaline. Alle genannten aromatischen Kohlenwasserstoffe haben Siedepunkte über 150°C bei Normaldruck, in der Regel im Bereich von mehr als 150°C bis 330°C bei Normaldruck.

Mischungen der genannten aromatischen Kohlenwasserstoffe mit 9 oder mehr Kohlenstoffatomen sind im Handel als technische Lösungsmittelschnitte erhältlich, beispielsweise von der Firma ExxonMobil Chemical unter den Bezeichungen Solvesso® 100 (C₉- bis C₁₀-Aromatenschnitt), Solvesso® 150 (C₁₀- bis C₁₁-Aromatenschnitt) und Solvesso® 200 (C₁₀- bis C₁₄-Aromatenschnitt); ein derartiger C₁₀- bis C₁₁-Aromatenschnitt wird auch als "Solvent Naphta Heavy" ("Solvent Naphta schwer") bezeichnet.

Neben den genannten aromatischen Kohlenwasserstoffen mit 9 oder mehr Kohlenstoffatomen kann die Komponente (D) in der beschriebenen bevorzugten Ausführungsform 0 bis weniger als 20 Gew.-% nicht aromatische organische Lösungsmittel-Komponenten (beispielsweise langkettige Paraffine und/oder alicyclische Verbindungen und/oder heterocyclische Verbindungen mit Siedepunkten von jeweils mehr als 100°C, insbesondere mehr als 130°C) und/oder aromatische Lösungsmittel-Komponenten mit weniger als 9 Kohlenstoffatomen (beispielsweise Toluol oder Xylole) enthalten.

Die erfindungsgemäße Additivformulierung wird zweckmäßigerweise aus den Komponenten (A), (B), (C) und (D) durch Mischen hergestellt. Im Prinzip erlaubt jede denkbare Reihenfolge des Zusammenmischens den Erhalt der erfindungsgemäßen Additivformulierung. Es hat sich jedoch in Bezug auf die praktische Durchführbarkeit des Zusammenmischens als bevorzugt herausgestellt, dass man zuerst in Gegenwart mindestens eines Teils des hochsiedenden organischen Lösungsmittels (D) die Komponenten (A) und (C) miteinander homogen vermischt und anschließend die Komponente (B) einarbeitet. Weiterhin kann es vorteilhaft sein, die Vorgänge des Zusammenmischens bei leicht erhöhten Temperaturen durchzuführen, etwa bei 20 bis 80°C, inbesondere bei 25 bis 50°C. In einer besonders bevorzugten Ausführungsform vermischt man zuerst in Gegenwart mindestens eines Teils des hochsiedenden organischen Lösungsmittels (D) die Komponenten (A) und (C) homogen miteinander bei 30 bis 60°C, insbesondere bei 40 bis 55°C, und arbeitet anschließend die Komponente (B) ein, wobei die Mischung aus den Komponenten (A) und (C) und einem Teil des hochsiedenden organischen Lösungsmittels (D) vorzugsweise mindestens 1 Minute, insbesondere 1 bis 120 Minuten, vor allem 1 bis 30 Minuten, im vorgenannten Temperaturbereich gehalten wird, bevor die Komponente (B) eingearbeitet wird. Auch kann es vorteilhaft sein, die Vorgänge des Zusammenmischens ganz oder teilweise im Vakuum, zweckmäßigerweise bei 100 mbar bis weniger als 1 bar, insbesondere bei 10 mbar bis weniger als 1 bar, durchzuführen. Alle gängigen Mischtechniken und Mischorgane sind anwendbar.

Die erfindungsgemäße Additivformulierung wird im Sinne der vorliegenden Erfindung zur Antistatikausrüstung und Verbesserung der elektrischen Leitfähigkeit von unbelebtem organischen Material und zur Verhinderung von elektrostatischer Aufladung bei chemischen und physikalischen Verfahren verwendet.

Dazu wird die erfindungsgemäße Additivformulierung in das zu antistatisch auszurüstende und damit besser elektrisch leitfähig zu machende unbelebte organische Material während oder nach dessen Herstellung eingearbeitet oder eingemischt und möglichst homogen verteilt. Die Konzentration der erfindungsgemäßen Additivformulierung in dem unbelebten organischen Material beträgt in der Regel 0,01 bis 2000 Gew.-ppm, vorzugsweise 0,1 bis 1000 Gew.-ppm, vor allem 0,5 bis 500 Gew.-ppm, insbesondere 1 bis 350 Gew.-ppm, bezogen auf das unbelebte organische Material. Speziell bei der Verwendung in Kraftstoffen kann die Konzentration der erfindungsgemäßen Additivformulierung niedriger liegen, übliche Dosierraten sind dort 0.01 bis 1000 Gew.-ppm, vorzugsweise 0,1 bis 500 Gew.-ppm, vor allem 0,5 bis 100 Gew.-ppm, insbesondere 1 bis 10 Gew.-ppm, bezogen auf den Kraftstoff.

Unter unbelebtem organischen Material sind insbesondere kosmetische Präparate wie Salben und Lotionen, Arzneimittelformulierungen wie Pillen und Zäpfchen, photographische Aufzeichnungsmaterialien wie photographische Emulsionen, Anstrichmittel, Kunststoffe, Wachse, Lösungsmittel sowie Mineralölprodukte und Kraftstoffe, insbesondere Dieselkraftstoff, Heizöl, Ottokraftstoff, Flugbenzin und Turbinenkraftstoff, sowie Schmierstoffe, d.h. Motorenöle, Schmieröle, Hydrauliköle, Turbinenöle, Regleröle, Getriebe-, Schalt- und Automatiköle, Kalanderöle, Wärmeträgeröle, Metallbearbeitungsöle, Stoßdämpferöle und Schmierfette, zu verstehen.

Als Kunststoffe, die mit der erfindungsgemäßen Additivformulierung antistatisch ausgerüstet werden können, seien beispielsweise genannt:
Polymere von Mono- oder Diolefinen, wie Polyethylen niedriger oder hoher Dichte, Polypropylen, lineares Polybuten-1, Polyisopren, Polybutadien sowie Copolymerisate von Mono- oder Diolefinen oder Mischungen der genannten Polymeren;
Polystyrol sowie Copolymere von Styrol oder alpha-Methylstyrol mit Dienen und/oder Acrylderivaten, z.B. Styrol-Butadien, Styrol-Acrylnitril (SAN), Styrol-Ethylmethacrylat, Styrol-Butadien-Ethylacrylat, Styrol-Acrylnitril-Methacrylat, Acrylnitril-Butadien-Styrol (ABS) oder Methylmethacrylat-Butadien-Styrol (MBS); halogenhaltige Polymere, z.B. Polyvinylchlorid, Polyvinylfluorid, Polyvinylidenfluorid sowie deren Copolymere;
Polymere, die sich von α,β -ungesättigten Säuren und deren Derivaten ableiten, wie Polyacrylate, Polymethacrylate, Polyacrylamide und Polyacrylnitrile;
Polymere, die sich von ungesättigten Alkoholen und Aminen bzw. von deren Acylderivaten oder Acetalen ableiten, z.B. Polyvinylalkohol und Polyvinylacetat;
Polyurethane (beispielsweise als Material für Schuhsohlen), insbesondere thermoplastische Polyurethane, Polyamide, Polyharnstoffe, Polyphenylenether, Polyester, Polycarbonate, Polysulfone, Polyethersulfone, Polyetherketone sowie Ethylen-VinylacetatCopolymere (beispielsweise auch als Material für Schuhsohlen).

Zu den Anstrichmitteln, die mit der erfindungsgemäßen Additivformulierung antistatisch ausgerüstet werden können, zählen unter anderem Lacke wie Alkydharzlacke, Dispersionslacke, Epoxydharzlacke, Polyurethanlacke, Acrylharzlacke und Cellulosenitratlacke, oder Lasuren wie Holzschutzlasuren.

Zu den Wachsen, die mit der erfindungsgemäßen Additivformulierung antistatisch ausgerüstet werden können, zählen unter anderem die Ethylen-Vinylacetat-Copolymer-Wachse.

Als Lösungsmittel, die mit der erfindungsgemäßen Additivformulierung antistatisch ausgerüstet und damit besser leitfähig gemacht werden können, seien beispielsweise genannt: Alkane wie n-Pentan, n-Hexan oder n-Heptan, Alkene wie Hexen, Hepten, Octen, Nonen, Decen, Undecen oder Dodecen, Aromaten wie Toluol oder Xylol, Naphthene, Alkohole wie Methanol, Ethanol, Isopropanol oder tert.-Butanol, Aldehyde wie Acetaldehyd, Propionaldehyd oder Butryaldehyd, Ketone wie Aceton oder Butanon, Carbonsäuren wie Ameisensäure, Essigsäure oder Propionsäure, Carbonsäureester wie Essigsäuremethylester oder Essigsäureethylester, Carbonsäureamide wie N,N-Dimethylformamid, sowie Mischungen hieraus.

Die erfindungsgemäße Additivformufierung eignet sich in besonders vorteilhafter Weise zur Antistatikausrüstung und Verbesserung der Leitfähigkeit von Turbinenkraftstoffen (jet fuels). Turbinenkraftstoffe werden vor allem zum Betreiben von Flugzeugturbinen eingesetzt.

Die übliche Turbinenkraftstoffzusammensetzung enthält eine Hauptmenge eines flüssigen Turbinenkraftstoffs, wobei es sich beispielsweise um einen in der zivilen oder militärischen Luftfahrt üblichen Turbinenkraftstoff handelt. Dazu zählen beispielsweise Kraftstoffe der Bezeichnung Jet Fuel A, Jet Fuel A-1, Jet Fuel B, Jet Fuel JP-4, JP-5, JP-7, JP-8 und JP-8+100. Jet A und Jet A-1 sind kommerziell erhältliche Turbinenkraftstoffspezifikationen auf Kerosinbasis. Die zugehörigen Normen sind ASTM D 1655 sowie DEF STAN 91-91. Jet B ist ein weiter geschnittener Kraftstoff auf Basis von Naphtha- und Kerosinfraktionen. JP-4 ist äquivalent zu Jet B. JP-5, JP-7, JP-8 und JP-8+100 sind militärische Turbinenkraftstoffe, wie sie beispielsweise von der Marine und Luftwaffe eingesetzt werden. Zum Teil bezeichnen diese Normen Formulierungen, die bereits weitere Additive, wie Korrosionsinhibitoren, Vereisungsinhibitoren, weitere Antistatikmittel wie statische Dissipatoren, etc. enthalten.

Die erfindungsgemäße Additivformulierung kann dem Turbinenkraftstoff oder der Turbinenkraftstoffzusammensetzung in Kombination mit weiteren an sich bekannten Zusatzstoffen zugegeben werden. Geeignete Zusatzstoffe, die in der Turbinenkraftstoffzusammensetzung enthalten sein können, umfassen üblicherweise Detergenzien, vorrosionsinhibitoren, Antioxidantien wie sterisch gehinderte tert.-Butylphenole, N-Butylphenylendiamine oder N,N'-Diphenylamin und Derivate hiervon, Metalldesaktivatoren wie N,N'-Disalicyliden-1,2-diaminopropan, Lösungsvermittler, weitere marktgängige Antistatika wie Stadis® 450, Biocide, Anti-Icing-Mittel wie Diethylenglykolmethylether, sowie Mischungen der genannten Zusatzstoffe.

Bevorzugte Zusatzstoffe für einen Turbinenkraftstoff oder eine Turbinenkraftstoffzusammensetzung sind die nachfolgend aufgeführten speziellen Verbindungsklassen (E), (F) und (G):

Bevorzugte Zusatzstoffe (E) sind von Bernsteinsäureanhydrid abgeleitete Verbindungen mit langkettigen Kohlenwasserstofftesten mit in der Regel 15 bis 700, vor allem 30 bis 200 Kohlenstoffatomen. Diese Verbindungen können weitere funktionelle Gruppen aufweisen, die vorzugsweise ausgewählt sind unter Hydroxy-, Amino-, Amido- und/oder Imidogruppen. Bevorzugte Additive sind die entsprechenden Derivate von Polyalkenylbemsteinsäureanhydrid, welche z. B. durch Umsetzung von Polyalkenen mit Maleinsäureanhydrid auf thermischem Weg oder über die chlorierten Kohlenwasserstoffe erhältlich sind. Das zahlenmittlere Molekulargewicht der langkettigen Kohlenwasserstoffreste liegt vorzugsweise in einem Bereich von etwa 200 bis 10.000, besonders bevorzugt 400 bis 5000, insbesondere 600 bis 3000 und speziell 650 bis 2000. Vorzugsweise leiten sich diese langkettigen Kohlenwasserstoffreste von konventionellen und insbesondere von den zuvor genannten reaktiven Polyisobutenen ab. Von besonderem Interesse als Zusatzstoffe (E) sind die Derivate von Polyalkenylbernsteinsäureanhydriden mit Ammoniak, Monoaminen, Polyaminen, Monoalkoholen und Polyolen. Zur Derivatisierung bevorzugte Polyamine umfassen Ethylendiamin, Diethylentriamin, Triethylentetramin, Tetraethylenpentamin, Propylendiamin, etc. Geeignete Alkohole umfassen einwertige Alkohole, wie Ethanol, Allylalkohol, Dodecanol und Benzylalkohol, mehrwertige Alkohole, wie Ethylenglykol, Diethylenglykol, Propylenglykol, 1,2-Butandiol, Neopentylglykol, Glycerin, Trimethylolpropan, Erythrit, Pentaerythrit, Mannitol und Sorbitol.

Als Zusatzstoffe geeignete Bernsteinsäureanhydrid-Derivate (E) sind beispielsweise in der US 3 522 179, US 4 234 435, US 4 849 572, US 4 904 401, US 5 569 644 und US 6 165 235 beschrieben, worauf hier in vollem Umfang Bezug genommen wird.

Bevorzugte Zusatzstoffe (F) sind Polyalkenylthiophosphonatester. Der Polyalkenylrest diese Ester weist vorzugsweise ein zahlenmittleres Molekulargewicht im Bereich von etwa 300 bis 5000, besonders bevorzugt 400 bis 2000 und insbesondere 500 bis 1500 auf. Der Polyalkenylrest leitet sich vorzugsweise von Polyolefinen ab, wie sie zuvor bei der Komponente (E) als langkettiger Kohlenwasserstoffrest beschrieben wurden. Dabei handelt es sich speziell um Polyelkenylreste, die sich von konventionellen oder reaktiven Polyisobutenen ableiten. Geeignete Verfahren zur Herstellung geeigneter Polyalkenylthiophosphonatester durch Umsetzung eines Polyolefins mit einem Thiophosphorylierungsmittel sind z. B. in der US 5 725 611 beschrieben, worauf hier Bezug genommen wird.

Bevorzugte Zusatzstoffe (G) sind Mannich-Addukte. Derartige Addukte werden prinzipiell durch Mannich-Umsetzung von aromatischen Hydroxylverbindungen, insbesondere Phenol und Phenolderivaten, mit Aldehyden und Mono- oder Polyaminen erhalten. Vorzugsweise handelt es sich um die Umsetzungsprodukte von Polyisobuten-substituierten Phenolen mit Formaldehyd und Mono- oder Polyaminen wie Ethylendiamin, Diethylentriamin, Triethylentetramin, Tetraethylenpentamin, Dimethylaminopropylamin, etc. Geeignete Mannich-Addukte und Verfahren zu ihrer Herstellung sind z. B. in der US 5 876 468, EP-A 831 141, EP-A 1 233 990 und EP-A 1 226 188 beschrieben, worauf hier in vollem Umfang Bezug genommen wird.

Weitere mögliche Zusatzstoffe für einen Turbinenkraftstoff oder eine Turbinenkraftstoffzusammensetzung sind die in der WO 2007/012580 beschriebenen Tetrahydrobenzoxazin-Stabilisatoren und/oder die in der internationalen Patentanmeldung PCT/EP2007/051632 beschriebenen mehrkernigen phenolischen Stabilisatoren, worauf hier in vollem Umfang Bezug genommen wird.

Die Zusatzstoffe (E) bis (G) sowie gegebenenfalls weitere der zuvor genannten Zusatzstoffe können üblicherweise jeweils in Mengen von jeweils 0,0001 bis 1 Gew.-%, vorzugsweise 0,001 bis 0,6 Gew.-% und insbesondere 0,0015 bis 0,4 Gew.-%, bezogen auf die Gesamtmenge der Turbinenkraftstoffzusammensetzung, eingesetzt werden.

Die erfindungsgemäße Additivformulierung kann Bestandteil eines Additivkonzentrates für Turbinenkraftstoffe (jet fuels) sein, welches neben der erfindungsgemäßen Additivformulierung wenigstens ein Verdünnungsmittel sowie mindestens einen weiteren Zusatzstoff, der vorzugsweise unter den zuvor beschriebenen ausgewählt ist, enthält. Vorzugsweise enthält dieses Additivkonzentrat, wie dann auch die damit additivierte Turbinenkraftstoffzusammensetzung, einen oder mehrere Zusatzstoffe aus der Gruppe (E), (F) und (G), insbesondere auch Mischungen hieraus wie (E) + (F), (E) + (G), (F) + (G) und (E) + (F) + (G).

Geeignete Verdünnungsmittel sind beispielsweise bei der Erdölverarbeitung anfallende Fraktionen wie Kerosin, Naphtha oder mineralische Grundöle. Geeignet sind darüber hinaus aromatische und aliphatische Kohlenwasserstoffe wie Solvent Naphtha schwer, Solvesso^{®} oder Shellsol^{®} sowie Gemische dieser Lösungs- und Verdünnungsmittel.

Die erfindungsgemäße Additivformulierung liegt im beschriebenen Additivkonzentrat für Turbinenkraftstoffe vorzugsweise in einer Menge von 0,01 bis 70 Gew.-%, besonders bevorzugt von 0,05 bis 25 Gew.-% und insbesondere von 0,1 bis 5 Gew.-%, bezogen auf das Gesamtgewicht des Konzentrats, vor.

Die beschriebene erfindungsgemäße Additivformulierung eignet sich weiterhin in vorteilhafter Weise zur Antistatikausrüstung und Verbesserung der Leitfähigkeit von Flugbenzin, Ottokraftstoffen und Mitteldestillat-Kraftstoffen, hier insbesondere von Dieselkraftstoff und Heizöl.

Flugbenzin ist ein speziell für Flugzeugmotore, insbesondere Ottomotore für Propellerflugzeuge, entwickelter Kraftstoff, der handelsüblichen Ottokraftstoffen zum Betrieb von Bodenfahrzeugen ähnelt.

Als Ottokraftstoffe kommen alle handelsüblichen Ottokraftstoffzusammensetzungen in Betracht. Als typischer Vertreter soll hier der marktübliche Eurosuper Grundkraftstoff gemäß EN 228 genannt werden. Weiterhin sind auch Ottokraftstoffzusammensetzungen der Spezifikation gemäß WO 00/47698 mögliche Einsatzgebiete für die vorliegende Erfindung. Die genannten Ottokraftstoffe können weiterhin auch Bioethanol enthalten.

Als Mitteldestillat-Kraftstoffe kommen alle handelsüblichen Dieselkraftstoff- und Heizölzusammensetzungen in Betracht. Als typischer Vertreter soll hier der marktübliche europäische Dieselkraftstoff gemäß EN 590 genannt werden. Bei Dieselkraftstoffen handelt es sich üblicherweise um Erdölraffinate, die in der Regel einen Siedebereich von 100 bis 400°C haben. Dies sind meist Destillate mit einem 95%-Punkt bis zu 360°C oder auch darüber hinaus. Dies können aber auch sogenannte "Ultra low sulfur diesel" oder "City diesel" sein, gekennzeichnet durch einen 95%-Punkt von beispielsweise maximal 345°C und einem Schwefelgehalt von maximal 0,005 Gew.-% oder durch einen 95%-Punkt von beispielsweise 285°C und einem Schwefelgehalt von maximal 0,001 Gew.-%. Neben den durch Raffination erhältlichen Dieselkraftstoffen, deren Hauptbestandteile längerkettige Paraffine darstellen, sind solche, die durch Kohlevergasung ["coal to liquid" (CTL) Kraftstoffe] oder Gasverflüssigung ["gas to liquid" (GTL) Kraftstoffe] erhältlich sind, geeignet. Geeignet sind auch Mischungen der vorstehend genannten Dieselkraftstoffe mit regenerativen Kraftstoffen wie Biodiesel. Weiterhin sind aus Biomasse erzeugte Dieselkraftstoffe ["biomass to liquid" (BTL) Kraftstoffe] geeignet. Von besonderem Interesse sind gegenwärtig Dieselkraftstoffe mit niedrigem Schwefelgehalt, das heißt mit einem Schwefelgehalt von weniger als 0,05 Gew.-%, vorzugsweise von weniger als 0,02 Gew.-%, insbesondere von weniger als 0,005 Gew.-% und speziell von weniger als 0,001 Gew.-% Schwefel. Dieselkraftstoffe können auch Wasser, z.B. in einer Menge bis zu 20 Gew.-%, enthalten, beispielsweise in Form von Diesel-Wasser-Mikroemulsionen oder als sogenannter "White Diesel".

Bei Heizölen handelt es sich beispielsweise um schwefelarme oder schwefelreiche Erdölraffinate oder um Stein- oder Braunkohledestillate, die üblicherweise einen Siedebereich von 150 bis 400°C aufweisen. Bei Heizölen kann es sich um Standard-Heizöl gemäß DIN 51603-1 handeln, das einen Schwefelgehalt von 0,005 bis 0,2 Gew.-% besitzt, oder es handelt sich um schwefelarme Heizöle mit einem Schwefelgehalt von 0 bis 0,005 Gew.-%. Als Beispiele für Heizöl sei insbesondere Heizöl für häusliche Ölfeuerungsanlagen oder Heizöl EL genannt.

Die erfindungsgemäße Additivformulierung kann entweder dem jeweiligen Grundkraftstoff, insbesondere dem Otto- oder dem Dieselkraftstoff, allein oder in Form von Kraftstoffadditiv-Paketen, z.B. den sogenannten Gasoline- bzw. Diesel-Performance-Paketen, zugesetzt werden. Derartige Pakete stellen Kraftstoffadditiv-Konzentrate dar und enthalten in der Regel neben Lösungsmitteln noch eine Reihe weiterer Komponenten als Coadditive, beispielsweise Trägeröle, Kaltfließverbesserer, Korrosionsinhibitoren, Demulgatoren, Dehazer, Antischaummittel, Cetanzahlverbesserer, Verbrennungsverbesserer, Antioxidantien oder Stabilisatoren, weitere Antistatika, Metallocene, Metalldeaktivatoren, Lösungsvermittler, Marker und/oder Farbstoffe.

In einer bevorzugten Ausführungsform umfasst der additivierte Otto- oder Dieselkraftstoff neben der erfindungsgemäßen Additivformulierung als weitere Kraftstoffadditive insbesondere mindestens ein Detergens, nachfolgend als Komponente (H) bezeichnet.

Als Detergentien oder Detergens-Additive (H) werden üblicherweise Ablagerungsinhibitoren für Kraftstoffe bezeichnet. Vorzugsweise handelt es sich bei den Detergentien um amphiphile Substanzen, die mindestens einen hydrophoben Kohlenwasserstoffrest mit einem zahlengemittelten Molekulargewicht (Mₙ) von 85 bis 20.000, insbesondere von 300 bis 5000, vor allem von 500 bis 2500, und mindestens eine polare Gruppierung besitzen, die ausgewählt ist unter
(Ha) Mono- oder Polyaminogruppen mit bis zu 6 Stickstoffatomen, wobei mindestens ein Stickstoffatom basische Eigenschaften hat;
(Hb) Nitrogruppen, gegebenenfalls in Kombination mit Hydroxylgruppen;
(Hc) Hydroxylgruppen in Kombination mit Mono- oder Polyaminogruppen, wobei mindestens ein Stickstoffatom basische Eigenschaften hat;
(Hd) Carboxylgruppen oder deren Alkalimetall- oder Erdalkalimetallsalzen;
(He) Sulfonsäuregruppen oder deren Alkalimetall- oder Erdalkalimetallsalzen;
(Hf) Polyoxy-C₂-C₄-alkylengruppierungen, die durch Hydroxylgruppen, Mono- oder Polyaminogruppen, wobei mindestens ein Stickstoffatom basische Eigenschaften hat, oder durch Carbamatgruppen terminiert sind;
(Hg) Carbonsäureestergruppen;
(Hh) aus Bernsteinsäureanhydrid abgeleiteten Gruppierungen mit Hydroxy- und/oder Amino- und/oder Amido- und/oder Imidogruppen; und/oder
(Hi) durch Mannich-Umsetzung von substituierten Phenolen mit Aldehyden und Mono- oder Polyaminen erzeugten Gruppierungen.

Der hydrophobe Kohlenwasserstoffrest in den obigen Detergens-Additiven, welcher für die ausreichende Löslichkeit in der Brennstoffölzusammensetzung sorgt, hat ein zahlengemitteltes Molekulargewicht (Mₙ) von 85 bis 20.000, insbesondere von 300 bis 5000, vor allem von 500 bis 2500. Als typischer hydrophober Kohlenwasserstoffrest, insbesondere in Verbindung mit den polaren Gruppierungen (Ha), (Hc), (Hh) und (Hi), kommen längerkettige Alkyl- oder Alkenylgruppen, insbesondere der Polypropenyl-, Polybutenyl- und Polyisobutenylrest mit jeweils Mₙ = 300 bis 5000, insbesondere 500 bis 2500, vor allem 700 bis 2300, in Betracht.

Als Beispiele für obige Gruppen von Detergens-Additiven seien die folgenden genannt:

Mono- oder Polyaminogruppen (Ha) enthaltende Additive sind vorzugsweise Polyalkenmono- oder Polyalkenpolyamine auf Basis von Polypropen oder konventionellem (d.h. mit überwiegend mittenständigen Doppelbindungen) Polybuten oder Polyisobuten mit Mₙ = 300 bis 5000. Derartige Additive auf Basis von hochreaktivem Polyisobuten, welche aus dem Polyisobuten, welches bis zu 20 Gew.-% n-Buten-Einheiten enthalten kann, durch Hydroformylierung und reduktive Aminierung mit Ammoniak, Monoaminen oder Polyaminen wie 3-(N,N-Dimethylamino)propylamin, Ethylendiamin, Diethylentriamin, Triethylentetramin oder Tetraethylenpentamin hergestellt werden können, sind insbesondere aus der EP-A 244 616 bekannt. Geht man bei der Herstellung der Additive von Polybuten oder Polyisobuten mit überwiegend mittenständigen Doppelbindungen (meist in der β- und γ-Position) aus, bietet sich der Herstellweg durch Chlorierung und anschließende Aminierung oder durch Oxidation der Doppelbindung mit Luft oder Ozon zur Carbonyl- oder Carboxylverbindung und anschließende Aminierung unter reduktiven (hydrierenden) Bedingungen an. Zur Aminierung können hier Amine, wie z. B. Ammoniak, Monoamine oder Polyamine, wie Dimethylaminopropylamin, Ethylendiamin, Diethylentriamin, Triethylentetramin oder Tetraethylenpentamin, eingesetzt werden. Entsprechende Additive auf Basis von Polypropen sind insbesondere in der WO-A-94/24231 beschrieben.

Weitere bevorzugte Monoaminogruppen (Ha) enthaltende Additive sind die Hydrierungsprodukte der Umsetzungsprodukte aus Polyisobutenen mit einem mittleren Polymerisationsgrad P = 5 bis 100 mit Stickoxiden oder Gemischen aus Stickoxiden und Sauerstoff, wie sie insbesondere in WO-A-97/03946 beschrieben sind.

Weitere bevorzugte Monoaminogruppen (Ha) enthaltende Additive sind die aus Polyisobutenepoxiden durch Umsetzung mit Aminen und nachfolgender Dehydratisierung und Reduktion der Aminoalkohole erhältlichen Verbindungen, wie sie insbesondere in DE-A-196 20 262 beschrieben sind.

Nitrogruppen (Hb), gegebenenfalls in Kombination mit Hydroxylgruppen, enthaltende Additive sind vorzugsweise Umsetzungsprodukte aus Polyisobutenen des mittleren Polymerisationsgrades P = 5 bis 100 oder 10 bis 100 mit Stickoxiden oder Gemischen aus Stickoxiden und Sauerstoff, wie sie insbesondere in WO-A-96/03367 und WO-A-96/03479 beschrieben sind. Diese Umsetzungsprodukte stellen in der Regel Mischungen aus reinen Nitropolyisobutenen (z. B. α,β-Dinitropolyisobuten) und gemischten Hydroxynitropolyisobutenen (z. B. α-Nitro-β-hydroxypolyisobuten) dar.

Hydroxylgruppen in Kombination mit Mono- oder Polyaminogruppen (Hc) enthaltende Additive sind insbesondere Umsetzungsprodukte von Polyisobutenepoxiden, erhältlich aus vorzugsweise überwiegend endständige Doppelbindungen aufweisendem Polyisobuten mit Mₙ= 300 bis 5000, mit Ammoniak, Mono- oder Polyaminen, wie sie insbesondere in EP-A-476 485 beschrieben sind.

Carboxylgruppen oder deren Alkalimetall- oder Erdalkalimetallsalze (Hd) enthaltende Additive sind vorzugsweise Copolymere von C₂-C₄₀-Olefinen mit Maleinsäureanhydrid mit einer Gesamt-Molmasse von 500 bis 20000, deren Carboxylgruppen ganz oder teilweise zu den Alkalimetall- oder Erdalkalimetallsalzen und ein verbleibender Rest der Carboxylgruppen mit Alkoholen oder Aminen umgesetzt sind. Solche Additive sind insbesondere aus der EP-A-307 815 bekannt. Derartige Additive dienen hauptsächlich zur Verhinderung von Ventilsitzverschleiß und können, wie in der WO-A-87/01126 beschrieben, mit Vorteil in Kombination mit üblichen Kraftstoffdetergenzien wie Poly(iso)-butenaminen oder Polyetheraminen eingesetzt werden.

Sulfonsäuregruppen oder deren Alkalimetall- oder Erdalkalimetallsalze (He) enthaltende Additive sind vorzugsweise Alkalimetall- oder Erdalkalimetallsalze eines Sulfobernsteinsäurealkylesters, wie er insbesondere in der EP-A-639 632 beschrieben ist. Derartige Additive dienen hauptsächlich zur Verhinderung von Ventilsitzverschleiß und können mit Vorteil in Kombination mit üblichen Kraftstoffdetergenzien wie Poly(iso)-butenaminen oder Polyetheraminen eingesetzt werden.

Polyoxy-C₂-C₄-alkylengruppierungen (Hf) enthaltende Additive sind vorzugsweise Polyether oder Polyetheramine, welche durch Umsetzung von C₂-C₆₀-Alkanolen, C₆-C₃₀-Alkandiolen, Mono- oder Di-C₂-C₃₀-alkylaminen , C₁-C₃₀-Alkylcyclohexanolen oder C₁-C₃₀-Alkylphenolen mit 1 bis 30 mol Ethylenoxid und/oder Propylenoxid und/oder Butylenoxid pro Hydroxylgruppe oder Aminogruppe und, im Falle der Polyetheramine, durch anschließende reduktive Aminierung mit Ammoniak, Monoaminen oder Polyaminen erhältlich sind. Derartige Produkte werden insbesondere in EP-A-310 875, EP-A-356 725, EP-A-700 985 und US-A-4 877 416 beschrieben. Im Falle von Polyethem erfüllen solche Produkte auch Trägeröleigenschaften. Typische Beispiele hierfür sind Tridecanol- oder Isotridecanolbutoxylate, Isononylphenolbutoxylate sowie Polyisobutenolbutoxylate und -propoxylate sowie die entsprechenden Umsetzungsprodukte mit Ammoniak.

Carbonsäureestergruppen (Hg) enthaltende Additive sind vorzugsweise Ester aus Mono-, Di- oder Tricarbonsäuren mit langkettigen Alkanolen oder Polyolen, insbesondere solche mit einer Mindestviskosität von 2 mm²/s bei 100°C, wie sie insbesondere in DE-A-38 38 918 beschrieben sind. Als Mono-, Di- oder Tricarbonsäuren können aliphatische oder aromatische Säuren eingesetzt werden, als Esteralkohole bzw. -polyole eignen sich vor allem langkettige Vertreter mit beispielsweise 6 bis 24 C-Atomen. Typische Vertreter der Ester sind Adipate, Phthalate, iso-Phthalate, Terephthalate und Trimellitate des iso-Octanols, iso-Nonanols, iso-Decanols und des iso-Tridecanols. Derartige Produkte erfüllen auch Trägeröleigenschaften.

Aus Bernsteinsäureanhydrid abgeleitete Gruppierungen mit Hydroxy- und/oder Amino- und/oder Amido- und/oder Imidogruppen (Hh) enthaltende Additive sind vorzugsweise entsprechende Derivate von Alkyl- oder Alkenyl-substituiertem Bernsteinsäureanhydrid und insbesondere die entsprechenden Derivate von Polyisobutenylbemsteinsäureanhydrid, welche durch Umsetzung von konventionellem oder hochreaktivem Polyisobuten mit Mₙ = 300 bis 5000 mit Maleinsäureanhydrid auf thermischem Weg oder über das chlorierte Polyisobuten erhältlich sind. Von besonderem Interesse sind hierbei Derivate mit aliphatischen Polyaminen wie Ethylendiamin, Diethylentriamin, Triethylentetramin oder Tetraethylenpentamin. Bei den Gruppierungen mit Hydroxy- und/oder Amino- und/oder Amido- und/oder Imidogruppen handelt es sich beispielsweise um Carbonsäuregruppen, Säureamide von Monoaminen, Säureamide von Di- oder Polyaminen, die neben der Amidfunktion noch freie Amingruppen aufweisen, Bernsteinsäurederivate mit einer Säure- und einer Amidfunktion, Carbonsäureimide mit Monoaminen, Carbonsäureimide mit Di- oder Polyaminen, die neben der Imidfunktion noch freie Amingruppen aufweisen, oder Diimide, die durch die Umsetzung von Di- oder Polyaminen mit zwei Bernsteinsäurederivaten gebildet werden. Derartige Kraftstoffadditive sind insbesondere in US-A-4 849 572 beschrieben.

Bei den Detergens-Additiven aus der Gruppe (Hh) handelt es sich vorzugsweise um die Umsetzungsprodukte von Alkyl- oder Alkenyl-substituierten Bernsteinsäureanhydriden, insbesondere von Polyisobutenylbemsteinsäureanhydriden, mit Aminen und/oder Alkoholen. Es handelt sich hierbei somit um von Alkyl-, Alkenyl- oder Polyisobutenyl-Bernsteinsäureanhydrid abgeleitete Derivate mit Amino- und/oder Amido- und/oder Imido- und/oder Hydroxylgruppen. Es versteht sich von selbst, dass diese Umsetzungsprodukte nicht nur bei Einsatz von substituiertem Bernsteinsäureanhydrid, sondern auch bei Verwendung von substituierter Bernsteinsäure oder geeigneten Säurederivaten, wie Bernsteinsäurehalogenide oder-ester, erhältlich sind.

Umfasst der additivierte Kraftstoff ein Detergens auf Basis eines Polyisobutenyl-substituierten Bernsteinsäureimids, sind speziell die Imide mit aliphatischen Polyaminen von Interesse. Besonders bevorzugte Polyamine sind dabei Ethylendiamin, Diethylentriamin, Triethylentetramin, Pentaethylenhexamin und vor allem Tetraethylenpentamin. Der Polyisobutenylrest besitzt ein zahlenmittleres Molekulargewicht Mₙ von vorzugsweise 500 bis 5000, besonders bevorzugt von 500 bis 2000 und insbesondere von etwa 1000.

Durch Mannich-Umsetzung von substituierten Phenolen mit Aldehyden und Mono- oder Polyaminen erzeugte Gruppierungen (Hi) enthaltende Additive sind vorzugsweise Umsetzungsprodukte von Polyisobuten-substituierten Phenolen mit Formaldehyd und Mono- oder Polyaminen wie Ethylendiamin, Diethylentriamin, Triethylentetramin, Tetraethylenpentamin oder Dimethylaminopropylamin. Die Polyisobutenyl-substituierten Phenole können aus konventionellem oder hochreaktivem Polyisobuten mit Mₙ = 300 bis 5000 stammen. Derartige "Polyisobuten-Mannichbasen" sind insbesondere in der EP-A-831 141 beschrieben.

Verzugsweise werden die genannten Detergens-Additive (H) zusammen mit der erfindungsgemäßen Additivformulierung in Kombination mit wenigstens einem Trägeröl verwendet.

Geeignete mineralische Trägeröle sind bei der Erdölverarbeitung anfallende Fraktionen, wie Brightstock oder Grundöle mit Viskositäten wie beispielsweise aus der Klasse SN 500 - 2000; aber auch aromatische Kohlenwasserstoffe, paraffinische Kohlenwasserstoffe und Alkoxyalkanole. Brauchbar ist ebenfalls eine als "hydrocrack oil" bekannte und bei der Raffination von Mineralöl anfallende Fraktion (Vakuumdestillatschnitt mit einem Siedebereich von etwa 360 bis 500°C, erhältlich aus unter Hochdruck katalytisch hydriertem und isomerisiertem sowie entparaffiniertem natürlichen Mineralöl). Ebenfalls geeignet sind Mischungen oben genannter mineralischer Trägeröle. Beispiele für geeignete synthetische Trägeröle sind ausgewählt unter: Polyolefinen (Polyalphaolefinen oder Polyintemalolefinen), (Poly)estem, (Poly)alkoxylaten, Polyethern, aliphatischen Polyetheraminen, alkylphenolgestarteten Polyethern, alkylphenolgestarteten Polyetheraminen und Carbonsäureestern langkettiger Alkanole.

Beispiele für geeignete Polyolefine sind Olefinpolymerisate mit Mₙ = 400 bis 1800, vor allem auf Polybuten- oder Polyisobuten-Basis (hydriert oder nicht hydriert).

Beispiele für geeignete Polyether oder Polyetheramine sind vorzugsweise Polyoxy-C₂-C₄-alkylengruppierungen enthaltende Verbindungen, welche durch Umsetzung von C₂-C₆₀-Alkanolen, C₆-C₃₀-Alkandiolen, Mono- oder Di-C₂-C₃₀-alkylaminen, C₁-C₃₀-Alkyl-cyclohexanolen oder C₁-C₃₀-Alkylphonolen mit 1 bis 30 mol Ethylenoxid und/ oder Propylenoxid und/oder Butylenoxid pro Hydroxylgruppe oder Aminogruppe und, im Falle der Polyetheramine, durch anschließende reduktive Aminierung mit Ammoniak, Monoaminen oder Polyaminen erhältlich sind. Derartige Produkte werden insbesondere in EP-A 310 875, EP-A 356 725, EP-A 700 985 und US-A 4,877,416 beschrieben. Beispielsweise können als Polyetheramine Poly-C₂-C₆-Alkylenoxidamine oder funktionelle Derivate davon verwendet werden. Typische Beispiele hierfür sind Tridecanol- oder Isotridecanolbutoxylate, Isononylphenolbutoxylate sowie Polyisobutenolbutoxylate und -propoxylate sowie die entsprechenden Umsetzungsprodukte mit Ammoniak.

Beispiele für Carbonsäureester langkettiger Alkanole sind insbesondere Ester aus Mono-, Di- oder Tricarbonsäuren mit langkettigen Alkanolen oder Polyolen , wie sie insbesondere in der DE-A 38 38 918 beschrieben sind. Als Mono-, Di- oder Tricarbonsäuren können aliphatische oder aromatische Säuren eingesetzt werden, als Esteralkohole bzw. -polyole eignen sich vor allem langkettige Vertreter mit beispielsweise 6 bis 24 C-Atomen. Typische Vertreter der Ester sind Adipate, Phthalate, iso-Phthalate, Terephthalate und Trimellitate des Isooctanols, Isononanols, Isodecanols und des Isotridecanols, wie z. B. Di-(n- oder iso-tridecyl)phthalat.

Weitere geeignete Trägerölsysteme sind beispielsweise in DE-A 38 26 608, DE-A 41 42 241, DE-A 43 09 074, EP-A 0 452 328 und EP-A 0 548 617 beschrieben.

Beispiele für besonders geeignete synthetische Trägeröle sind alkoholgestartete Polyether mit etwa 5 bis 35, wie z. B. etwa 5 bis 30, C₃-C₆-Alkylenoxideinheiten, wie z. B. ausgewählt unter Propylenoxid-, n-Butylenoxid- und i-Butylenoxid-Einheiten, oder Gemischen davon. Nichtlimitierende Beispiele für geeignete Starteralkohole sind langkettige Alkanole oder mit langkettigem Alkyl-substituierte Phenole, wobei der langkettige Alkylrest insbesondere für einen geradkettigen oder verzweigten C₆-C₁₈-Alkylrest steht. Als bevorzugte Beispiel sind zu nennen Tridecanol und Nonylphenol.

Weitere geeignete synthetische Trägeröle sind alkoxylierte Alkylphenole, wie sie in der DE-A 101 02 913 beschrieben sind.

Bevorzugte Trägeröle sind synthetische Trägeröle, wobei Polyether besonders bevorzugt sind.

Dem additivierten Kraftstoff wird das Detergens-Additiv (H) oder ein Gemisch verschiedener solcher Detergens-Additive in einer Gesamtmenge von vorzugsweise 10 bis 2000 Gew.-ppm, besonders bevorzugt von 20 bis 1000 Gew.-ppm, stärker bevorzugt von 50 bis 500 Gew.-ppm und insbesondere von 50 bis 200 Gew.-ppm, z.B. von 70 bis 150 Gew.-ppm, zugesetzt.

Wenn ein Trägeröl mitverwendet wird, so wird dieses dem erfindungsgemäßen additivierten Kraftstoff in einer Menge von vorzugsweise 1 bis 1000 Gew.-ppm, besonders bevorzugt von 10 bis 500 Gew.-ppm und insbesondere von 20 bis 100 Gew.-ppm, zugesetzt.

Als weitere Coadditive geeignete Kaltfließverbesserer sind beispielsweise Copolymere von Ethylen mit wenigstens einem weiteren ungesättigten Monomer, z.B. EthylenVinylacetat-Copolymere.

Als weitere Coadditive geeignete Korrosionsinhibitoren sind beispielsweise Bernsteinsäureester, vor allem mit Polyolen, Fettsäurederivate, z.B. Ölsäureester, oligomerisierte Fettsäuren und substituierte Ethanolamine.

Als weitere Coadditive geeignete Demulgatoren sind beispielsweise die Alkali- und Erdalkalimetallsalze von alkylsubstituierten Phenol- und Naphthalinsulfonaten und die Alkali- und Erdalkalimetallsalze von Fettsäure, weiterhin Alkoholalkoxylate. z.B. Alkoholethoxylate, Phenolalkoxylate, z.B. tert.-Butylphenolethoxylate oder tert.-Pentylphenolethoxylate, Fettsäure, Alkylphenole, Kondensationsprodukte von Ethylenoxid und Propylenoxid, z.B. Ethylenoxid-Propylenoxid-Blockcopolymere, Polyethylenimine und Polysiloxane.

Als weitere Coadditive geeignete Dehazer sind beispielsweise alkoxylierte Phenol-Formaldehyd-Kondensate.

Als weitere Coadditive geeignete Antischaummittel sind beispielsweise Polyethermodifizierte Polysiloxane.

Als weitere Coadditive geeignete Cetanzahl- und Verbrennungsverbesserer sind beispielsweise Alkylnitrate, z.B. Cyclohexylnitrat und insbesondere 2-Ethylhexylnitrat, und Peroxide, z.B. Di-tert.-butylperoxid.

Als weitere Coadditive geeignete Antioxidantien sind beispielsweise substituierte Phenole, z.B. 2,6-Di-tert.-butylphenol und 2,6-Di-tert.-butyl-3-methylphenol, sowie Phenylendiamine, z.B. N,N'-Di-sec.-butyl-p-phenylendiamin.

Als weitere Coadditive geeignete Metalldeakivatoren sind beispielsweise Salicylsäure-Derivate, z.B. N,N'-Disalicyliden-1,2-propandiamin.

Als Lösungsmittel eignen sich, insbesondere für Kraftstoffadditiv-Pakete, beispielsweise unpolare organische Lösungsmittel, insbesondere aromatische und aliphatische Kohlenwasserstoffe, z.B. Toluol, Xylole, "white spirit" sowie die technischen Lösungsmittelgemische der Bezeichnungen Shellsol® (Hersteller: Royal Dutch / Shell Group), Exxol® (Hersteller. ExxonMobil) und Solvent Naphtha. Weiterhin kommen hier, insbesondere in Abmischung mit den genannten unpolaren organischen Lösungsmitteln, polare organische Lösungsmittel, vor allem Alkohole wie 2-Ethylhexanol, 2-Propylheptanol, Decanol und Isotridecanol, in Betracht.

Wenn die genannten Coadditive und/oder Lösungsmittel in Otto- oder Dieselkraftstoff mitverwendet werden, werden sie in den hierfür übliche Mengen eingesetzt.

Die beschriebene erfindungsgemäße Additivformulierung eignet sich weiterhin auch in vorteilhafter Weise zur Antistatikausrüstung und Verbesserung der Leitfähigkeit von Schmierstoffen. Als Schmierstoffe oder Schmierstoffzusammensetzungen sollen hier Motorenöle, Schmieröle, Hydrauliköle, Turbinenöle, Regleröle, Getriebe-, Schalt- und Automatiköle, Kalanderöle, Wärmeträgeröle, Metallbearbeitungsöle, Stoßdämpferöle und verwandte flüssige Zusammensetzungen, die der Schmierung von mechanisch bewegten Teilen - zumeist als Metall- dienen, bezeichnet werden. Weiterhin sind auch Schmierfette zu den Schmierstoffen zu zählen.

Die wirtschaftlich bedeutsamsten Schmierstoffzusammensetzungen sind Motorenöle sowie Getriebe-, Schalt- und Automatiköle. Motorenöle bestehen üblicherweise aus mineralischen Grundölen, welche überwiegend paraffnische Bestandteile enthalten und durch aufwendige Aufarbeitungs- und Reinigungsprozesse in der Raffinerie hergestellt werden, mit einem Anteil an ca. 2 bis 10 Gew.-% an Additiven (bezogen auf die Wirksubstanz-Gehalte). Für spezielle Anwendungen, beispielsweise Hochtemperatur-Einsätze, können die mineralischen Grundöle teilweise oder vollständig durch synthetische Komponenten wie organische Ester, synthetische Kohlenwasserstoffe wie Olefinoligomete, Poly-α-Olefine oder Polyolefine oder Hydrocrack-Öle ersetzt sein. Motorenöle müssen auch bei hohen Temperaturen ausreichend hohe Viskositäten aufweisen, um einen einwandfreien Schmiereffekt und eine gute Abdichtung zwischen Zylinder und Kolben zu gewährleisten. Weiterhin müssen Motorenöle von ihren Fließeigenschaften auch so beschaffen sein, dass bei niedrigen Temperaturen der Motor problemlos gestartet werden kann. Motorenöle müssen oxidationsstabil sein und dürfen auch unter schweren Arbeitsbedingungen nur wenig Zersetzungsprodukte in flüssiger oder fester Form sowie Ablagerungen erzeugen. Motorenöle dispergieren Feststoffe (Dispersant-Verhalten), verhindern Ablagerungen (Detergent-Verhalten), neutralisieren saure Reaktionsprodukte und bilden einen Verschleißschutzfilm auf den Metalloberflächen im Motor aus. Motorenöle werden üblicherweise nach Viskositätsklassen-Klassen (SAE-Klassen) charakterisiert.

Getriebe-, Schalt- und Automatiköle sind bezügliche ihrer Grundkomponenten und Additive ähnlich wie Motorenöle zusammengesetzt. Die Kraftübertragung im Zahnradsystem von Getrieben erfolgt zu einem hohen Anteil durch den Flüssigkeitsdruck im Getriebeöl zwischen den Zähnen. Das Getriebeöl muß demzufolge so beschaffen sein, dass es auf Dauer hohe Drücke aushält, ohne sich zu zersetzen. Neben den Viskositätseigenschaften sind hier Verschleiß, Druckfestigkeit, Reibung, Scherstabilität, Traktion und Einlaufverhalten die entscheidenden Größen.

Motorenöle und Getriebe-, Schalt- und Automatiköle enthalten neben der im Sinne der vorliegenden Erfindung einzusetzenden erfindungsgemäßen Additivformulierung in der Regel noch mindestens eines, meist jedoch einige oder alle der nachfolgend aufgeführten Additive in den hierfür in der Regel üblichen Mengen (welche in Gew.-%, bezogen auf die Gesamt-Schmierstoffzusammensetzung, in Klammern angegeben sind):
(a) Antioxidantien (0,1 bis 5 %):
   Schwefelverbindungen, z.B. Reaktionsprodukte von Terpenen (α-Pinen), Harzölen oder niedermolekularen Polybutenen mit Schwefel, Dialkylsulfide, Dialkyltrisulfide, Polysulfide, Diarylsulfide, modifizierte Thiole, Mercaptobenzimidazole, Mercaptotriazine, Thiophen-Derivate, Xanthate, Zink-dialkyldithiocarbamate, Thioglykole, Thioaldehyde, Dibenzyldisulfid, Alkylphenolsulfide, Dialkylphenolsulfide oder schwefelhaltige Carbonsäuren
   Phosphorverbindungen, z.B. Triaryl- und Trialkylphosphite, 3,5-di-tert.-butyl-4-hydroxybenzyl-phosphonsäure-dialkylester oder Phosphonsäurepiperazide
   Schwefel-Phosphor-Verbindungen, z.B. Zink-dialkyldithiophosphate (Metalldialkyldithiophosphate wirken in Schmierölen auch als Korrosionsinhibitoren und Hochdruckadditive) oder Reaktionsprodukte von Phosphorpentasulfid mit Terpenen (α-Pinen, Dipenten), Polybutenen, Olefinen oder ungesättigten Estern
   Phenol-Derivate, z.B. sterisch gehinderte Mono-, Bis- oder Trisphenole, sterisch gehinderte mehrkernige Phenole, Polyalkylphenole, 2,6-Di-tert.-butyl-4-methylphenol oder Methylen-4,4'-bis(2,6-di-tert.-butylphenol) (Phenol-Derivate werden oft in Kombination mit Antioxidantien auf Schwefelbasis oder Aminbasis eingesetzt)
   Amine, z.B. Arylamine wie Diphenylamin, Phenyl-α-naphthylamin oder 4,4'-Tetramethyldiamino-diphenylmethan
   Metalldeaktivatoren im engeren Sinne, z.B. N-Salicyliden-ethylamin, N,N'-Disalicyliden-ethylendiamin, N,N'-Disalicyliden-1,2-propandiamin, Triethylendiamin, Ethylendiamintetraessigsäure, Phosphorsäure, Zitronensäure, Glykolsäure, Lecithin, Thiadiazol, Imidazol oder Pyrazol-Derivate
(b) Viskositätsindex-Verbesserer (0,05 bis 10 %), z.B: Polyisobutene mit einem Molekulargewicht von üblicherweise 10.000 bis 45.000, Polymethacrylate mit einem Molekulargewicht von üblicherweise15.000 bis 100.000, Homo- und Copolymerisate von 1,3-Dienen wie Butadien oder Isopren mit einem Molekulargewicht von üblicherweise 80.000 bis 100.000, 1,3-Dien-Styrol-Copolymerisate mit einem Molekulargewicht von üblicherweise 80.000 bis 100.000, Maleinsäureanydrid-StyrolPolymere in veresterter Form mit einem Molekulargewicht von üblicherweise 60.000 bis 120.000, sternförmige Polymere mit blockförmigem Aufbau durch Einheiten aus konjugierten Dienen und aromatischen Monomeren mit einem Molekulargewicht von üblicherweise 200.000 bis 500.000, Polyalkylstyrole mit einem Molekulargewicht von üblicherweise 80.000 bis 150.000, Polyolefine aus Ethylen und Propylen oder Styrol-Cyclopentadien-Norbomen-Terpolymere mit einem Molekulargewicht von üblicherweise 60.000 bis 140.000
(c) Pour Point Emiedriger (Kalttließverbesserer) (0,03 bis 1 %), z.B. bicyclische Aromaten wie Naphthalin mit verschiedenen langkettigen Alkylresten, Polymethyacrylate mit 12 bis 18 Kohlenstoffatomen im Alkoholrest, einem Verzweigungsgrad zwischen 10 bis 30 mol-% und einem durchschnittlichen Molekulargewicht von 5.000 bis 500.000, langkettige Alkylphenole und Phthalsäuredialkylarylester oder Copolymere verschiedener Olefine
(d) Detergentien (HD Additive) (0,2 bis 4 %), z.B. Calcium-, Blei-, Zink- und Mangan-Naphthenate, Calcium-Dichlorostearate, Calcium-Phenylstearate, Calcium-Chloro-phenylstearate, Sulfonierungsprodukte von Alkylaromaten wie Dodecylbenzol, Petroleumsulfonate, Natrium-, Calcium-, Barium- oder Magnesium-Sulfonate, neutrale, basische und überbasische Sulfonate, Phenate und Carboxylate, Salicylate, Metallsalze von Alkylphenolen und Alkylphenolsulfiden, Phosphate, Thiophosphate oder Alkenyl-phosphonsäure-Derivate
(e) Aschefreie Dispersantien (0,5 bis 10 %), z.B. Mannich-Kondensate aus Alkylphenol, Formaldehyd und Polyalkylenpolyaminen, Umsetzungsprodukte von Polyisobutenylsuccinanhydriden mit Polyhydroxy-Verbindungen oder Polyaminen, Copolymerisate von Alkylmethacrylaten mit Diethylaminoethyl-methacrylat, N-Vinylpyrrolidon, N-Vinylpryridin oder 2-Hydroxyethyl-methacrylat oder Vinylacetat-Fumarat-Copolymerisate
(f) Hochdruckadditive (Extreme Pressure Additive) (0,2 bis 2,5 %), z.B. chlorierte Paraffine mit 40 bis 70 Gew.-% Chlorgehalt, chlorierte Fettsäure (insbesondere mit Trichlormethyl-Endgruppen), Dialkylhydrogenphosphite, Triarylphosphite, Arylphosphate wie Trikresylphosphat, Dialkylphosphate, Trialkylphosphate wie Tributylphosphat, Trialkylphosphine, Diphosphorsäureester, Nitroaromaten, Aminophenol-Derivate der Naphthensäure, Carbaminsäureester, Dithiocarbaminsäure-Derivate, substituierte 1,2,3-Triazole, Mischungen aus Benzotriazol und Alkylbernsteinsäureanhydrid oder Alkylmaleinsäureanhydrid, 1,2,4-Thiadiazol-Polymere, Morpholinobenzothiadiazol-disulfid, chlorierte Alkylsulfide, suffurisierte Olefine, sulfurisierte Chlornaphthaline, chlorierte Alkylthiocarbonate, organische Sulfide und Polysulfide wie Bis(4-chlorbenzyl)-disulfid und Tetrachlordiphenylsutfid, Trichloracrolein-Mercaptale oder insbesondere Zink-dialkyldithiophosphate (ZDDP)
(g) Reibungsverminderer (Friction Modifier) (0,05 bis 1 %), insbesondere polare öllösliche Verbindungen, die eine dünne Schicht auf der Reibungsfläche durch Adsorption erzeugen, z-B. Fettalkohole, Fettamide, Fettsäuresalze, Fettsäurealkylester oder Fettsäureglyceride
(h) Antischaum-Additive (0,0001 bis 0,2 %), z.B. flüssige Silicone wie Polydimethylsiloxane oder Polhethylenglykolether und -sulfide
(i) Demulgatoren (0,1 bis 1 %), z.B. Dinonylnaphthalinsulfonate in Form ihrer Alkali- und Erdalkalimetallsalze
(j) Korrosionsinhibitoren (auch als Metalldeaktivatoren bezeichnet) (0,01 bis 2 %), z.B. tertiäre Amine und ihre Salze, Iminoester, Amidoxime, Diaminomethane, Derivate von gesättigten oder ungesättigten Fettsäuren mit Alkanolaminen, Alkylamine, Sarcosine, Imidazoline, Alkylbenzotriazole, Dimercaptothiadiazol-Derviate, Diarylphosphate, Thiophosphorsäureester, Neutralsalze von primären n-C₈-C₁₈-Alkylaminen oder Cycloalkylaminen mit Dialkylphosphaten mit verzweigten C₅-C₁₂-Alkylgruppen, neutrale oder basische Erdalkalimetallsulfonate, Zinknaphthenate, Mono- und Dialkylarylsulfonate, Bariumdinonylnaphthalinsulfonate, Lanolin (Wollfett), Schwermetallsalze der Naphthensäure, Dicarbonsäure, ungesättigte Fettsäuren, Hydroxyfettsäuren, Fettsäureester, Pentaerythritol- und Sorbitan-Monooleate, O-Stearoylalkanolamine, Polyisobutenylbemsteinsäure-Derivate oder Zink-dialkyldithiophosphate und Zink-dialkyldithiocarbamate
(k) Emulgatoren (0,01 bis 1 %), z.B. langkettige ungesättigte, natürlich vorkommmende Carbonsäure, Naphthensäuren, synthetische Carbonsäure, Sulfonamide, N-Oleylsarcosin, Alkansulfamidoessigsäure, Dodecylbenzolsulfonat, langkettige alkylierte Ammoniumsalze wie Dimethyldodecylbenzylammonium-chlorid, Imidazolinium-Salze, Alkyl-, Alkylaryl-, Acyl-, Alkylamino- und Acylaminopolyglykole oder langkettige acylierte Mono- und Diethanolamine
(l) Farbstoffe und Fluoreszenzadditive (0,001 bis 0,2 %)
(m) Konservierungsmittel (0,001 bis 0,5 %)
(n) Geruchsverbesserer (0,001 bis 0,2 %)

Typische gebrauchsfertige Motorenöl- und Getriebe-, Schalt- und Automatiköl-Zusammensetzungen im Rahmen der vorliegenden Erfindung sind folgendermaßen zusammengesetzt, wobei sich die Angaben für die Additive auf die Wirksubstanz-Gehalte beziehen und die Summe aller Komponenten immer 100 Gew.-% ergibt:
- 80 bis 99,3 Gew.-%, insbesondere 90 bis 98 Gew.-% Motorenöl- bzw. Getriebe-, Schalt- und Automatiköl-Grundlage (mineralische Grundöle und/oder synthetische Komponenten) einschließlich der Anteile an Lösungs- und Verdünnungsmittel für die Additive
- 0,01 bis 2000 Gew.-ppm, vorzugsweise 0,1 bis 1000 Gew.-ppm, vor allem 0,5 bis 500 Gew.-ppm, insbesondere 1 bis 350 Gew.-ppm, der erfindungsgemäßen Additivformulierung
- 0,2 bis 4 Gew.-%, insbesondere 1,3 bis 2,5 Gew.-% Detergentien der Gruppe (d)
- 0,5 bis 10 Gew.-%, insbesondere 1,3 bis 6,5 Ges.-% Dispersantien der Gruppe (e)
- 0,1 bis 5 Gew.-% ,insbesondere 0,4 bis 2,0 Gew.-% Antioxidantien der Gruppe (a) und/oder Hochdruckadditive der Gruppe (f) und/oder Reibungsverminderer der Gruppe (g)
- 0,05 bis 10 Gew.-%, insbesondere 0,2 bis 1,0 Gew.-% Viskositätsindex-Verbesserer der Gruppe (b)
- 0 bis 2 Gew.-% der sonstigen Additive der Gruppen (c) und (h) bis (n)

Als Beispiel für chemische und physikalische Verfahren, bei denen die erfindungsgemäße Additivformulierung zur Verhinderung von elektrostatischer Aufladung eingesetzt werden kann, ist das Polyethylen-Gasphasen-Wirbelschicht-Verfahren zu nennen. Hierbei wird Ethylen oder eine Mischung aus Ethylen und Comonomeren wie 1-Buten, 1-Hexen oder 1-Octen koordinativ polymerisiert. Die Dichte des entstehenden Polyethylens hängt entscheidend von der Menge und vom Typ des eingebauten Comonomeren ab. So wird hochdichtes HDPE bevorzugt aus Ethylen ohne Comonomere und niederdichtes LLDPE bei Anwesenheit signifikanter Mengen der oben genannten Comonomeren erhalten. Als Katalysator dienen bevorzugt auf Siliciumdioxid geträgerte Ziegler- oder Metallocen-Katalysatoren. Die Polymerisation wird in jedem Fall in einem Wirbelbett bei einer Temperatur unterhalb des Schmelzpunkts des Polyethylens durchgeführt, weshalb feste Produktpartikel an der Innenwand des turmförmigen Wirbelschicht-Reaktors reiben. Die erfindungsgemäße Additivformulierung dient zur Verhinderung der elektrostatischen Aufladung im gesamten Reaktorsystem und wirkt damit der Polymerbelagbildung an der Reaktorinnenwand und in den Wärmetauschern entgegen.

Gegenstand der vorliegenden Erfindung ist auch antistatisch ausgerüstetes unbelebtes organisches Material mit verbesserter elektrischer Leitfähigkeit, welches ausgewählt ist aus kosmetischen Präparaten, Arzneimittelformulierungen, photographische Aufzeichnungsmaterialien, Anstrichmitteln, Kunststoffen, Wachsen, Lösungsmitteln, Mineralölprodukten und Kraftstoffen und welches 0,01 bis 2000 Gew.-ppm, vorzugsweise 0,1 bis 1000 Gew.-ppm, vor allem 0,5 bis 500 Gew.-ppm, insbesondere 1 bis 350 Gew.-ppm, der erfindungsgemäßen Additivformulierung enthält.

Die erfindungsgemäße Additivformulierung gestattet im Vergleich zu den bekannten Mitteln eine noch effektivere und nachhaltigere Erhöhung der elektrischen Leitfähigkeit in unbelebtern organischen Material, insbesondere in Mineralölprodukten und Kraftstoffen, vor allem in Turbinen-, Otto- und Dieselkraftstoff sowie in Schmierstoffen. In vielen Fällen bleibt die elektrische Leitfähigkeit auch nach Lagerung auf konstant hohem Niveau, wogegen mit entsprechenden Additivformulierungen des Standes der Technik während der Lagerung ein deutliches Abfallen der Werte beobachtet werden kann. Schon mit sehr geringen Mengen im Bereich von wenigen Gew.-ppm erzielt man in Kraftstoffen in der Regel elektrische Leitfähigkeiten von wenigstens 50 bis 100 pS/m.

Die erfindungsgemäße Additivformulierung weist ein hohe thermische Stabilität auf. Sie ist metall- und halogenfrei. Sie weist weiterhin einen hohen Flammpunkt auf, somit ist sie bei ihrer Herstellung, ihrem Transport und ihrer Lagerung vor ihrem Einsatz im unbelebten organischen Material sicher, d.h. sie kann ohne Explosions- und Brandrisiko gehandhabt werden können.

Die Erfindung wir anhand der folgenden, nicht einschränkenden Beispiele näher erläutert.

### Beispiel 1: Herstellung eines 1-Decen-Schwefeldioxid-Copolymers bei 25°C

In einem 5 Liter-Autoklaven wurden 1122g (7,90 mol) 1-Decen und 28 g Dodecylmercaptan in 350 g Solvent Naphta Heavy (Solvesso® 150) vorgelegt. Bei 10 bis 20°C wurden 950 g (14,84 mol) Schwefeldioxid eingeleitet. Danach stellte man die Reaktionsmischung auf 25°C ein und fuhr während 3 Stunden bei dieser Temperatur eine Lösung von 72 g tert.-Butylperoxypivalat (75 gew.-%ig) in 700 g Solvent Naphta Heavy zu. Anschließend wurde 5 Stunden bei 20°C nachgerührt. Zur Aufarbeitung wurde der Autoklav entspannt und es wurde zuerst bei Normaldruck und danach im Vakuum (200 bis 10 mbar) entgast. Man erhielt 2,4 kg einer klaren, viskosen Polymerlösung. Der Umsatz betrug 95% (¹H-NMR-spektroskopisch bestimmt aufgrund des Integral-Verhältnisses der 3 Olefinprotonen des Restolefins bei 5,8 ppm / 4,9 ppm zu den 3 Protonen in der Polymerhauptkette bei 4,3-3,0 ppm). Das so erhaltene 1-Decen-Schwefel-dioxid-Copolymer hatte ein zahlengemitteltes Molekulargewicht Mₙ von 19.600 und eine Polydispersität PDI von 3,2.

### Beispiel 2: Herstellung eines 1-Decen-Schwefeldioxid-Copolymers bei 35°C

In einem 5 Liter-Autoklaven wurden 1122g (7,90 mol) 1-Decen und 28 g Dodecylmercaptan in 350 g Solvent Naphta Heavy (Solvesso® 150) vorgelegt. Bei 10 bis 20°C wurden 950 g (14,84 mol) Schwefeldioxid eingeleitet. Danach stellte man die Reaktionsmischung auf 35°C ein und fuhr während 2 Stunden bei dieser Temperatur eine Lösung von 72 g tert.-Butylperoxypivalat (75 gew.-%ig) in 700 g Solvent Naphta Heavy zu. Anschließend wurde 4 Stunden bei 20°C nachgerührt. Zur Aufarbeitung wurde der Autoklav entspannt und es wurde zuerst bei Normaldruck und danach im Vakuum (200 bis 10 mbar) entgast. Man erhielt 2,5 kg einer klaren, viskosen Polymerlösung. Der Umsatz betrug 97% (¹H-NMR-spektroskopisch bestimmt aufgrund des Integral-Verhältnisses der 3 Olefinprotonen des Restolefins bei 5,8 ppm / 4,9 ppm zu den 3 Protonen in der Polymerhauptkette bei 4,3-3,0 ppm). Das so erhaltene 1-Decen-Schwefeldioxid-Copolymer hatte ein zahlengemitteltes Molekulargewicht Mₙ von 13.400 und eine Polydispersität PDI von 2,9.

### Beispiel 3: Herstellung eines 1-Decen-Schwefeldioxid-Copolymers bei 33°C

In einem 5 Liter-Autoklaven wurden 1122g (7,90 mol) 1-Decen und 28 g Dodecylmercaptan in 630 g Solvent Naphta Heavy (Solvesso® 150) vorgelegt. Bei 10 bis 20°C wurden 720 g (11,25 mol) Schwefeldioxid eingeleitet. Danach stellte man die Reaktionsmischung auf 33°C ein und fuhr während 2 Stunden bei dieser Temperatur eine Lösung von 88 g tert.-Butylperoxypivalat (75 gew.-%ig) in 420 g Solvent Naphta Heavy zu. Anschließend wurde 4 Stunden bei 20°C nachgerührt. Zur Aufarbeitung wurde der Autoklav entspannt und es wurde zuerst bei Normaldruck und danach im Vakuum (200 bis 10 mbar) entgast. Man erhielt 2,5 kg einer klaren, viskosen Polymerlösung. Der Umsatz betrug 92% (¹H-NMR-spektroskopisch bestimmt aufgrund des Integral-Verhältnisses der 3 Olefinprotonen des Restolefins bei 5,8 ppm / 4,9 ppm zu den 3 Protonen in der Polymerhauptkette bei 4,3-3,0 ppm). Das so erhaltene 1-Decen-Schwefeldioxid-Copolymer hatte ein zahlengemittekes Molekulargewicht Mₙ von 12.500 und eine Polydispersität PDI von 2,5.

### Beispiel 4: Herstellung einer Additivformulierung aus einem 1-Decen-Schwefeldioxid-Copolymer, einem C₂₀₋₂₄-Olefin-Maleinsäureimid-Copolymer, Dodecylbenzolsulfonsäure und Solvent Naphta Heavy

1 kg der 1-Decen-Schwefeldioxid-Copolymerlösung (50 gew.-%ig in Solvent Naphta Heavy) aus Beispiel 2 [Komponente (A)] wurden unter Rühren bei 25 bis 35°C mit weiteren 1,1 kg Solvent Naphta Heavy vermischt. Danach wurden 160 g Dodecylbenzolsulfonsäure [Komponente (C)] unter Rühren bei der gleichen Temperatur zugegeben und homogen vermischt. Diese Mischung wurde 10 Minuten bei 40 bis 50°C gerührt. Anschließend wurden 1 kg einer Lösung von mit N-Talgfett-1,3-diaminopropan zum Imid ungesetztes C_{20/24}-α-Olefin-Maleinsäureanhydrid-Copolymer eines gewichtsgemittelten Molekulargewichtes M_{w} im Bereich von 2.000 bis 5.000 [Komponente (B)] in Solvent Naphta Heavy (50 gew.-%ig) bei der Temperatur von 40 bis 50°C zugegeben und homogen vermischt. Die erhaltene Additivformulierung hatte eine Zusammensetzung von 15,3 Gew.-% (A), 15,3 Gew.-% (B), 4,9 Gew.-% (C) und 64,4 Gew-% Solvent Naphta Heavy [Komponente (D)].

### Beispiel 5: Herstellung einer Additivformulierung aus einem 1-Decen-Schwefeldioxid-Copolymer, einem C_{20/24}-Olefin-Maleinsäureimid-Copolymer, Dodecylbenzolsulfonsäure und Sovent Naphta Heavy

Die gleichen Komponenten (A), (B), (C) und (D) wurden in Analogie zur Rezeptur in Beispiel 4 in solchen Mengenverhältnissen gemischt, dass eine Additivformulierung der Zusammensetzung von 21 Gew.-% (A), 18 Gew.-% (B), 7 Gew.-% (C) und 54 Gew.-% (D) resultierte.

### Beispiel 6: Herstellung einer Additivformulierung aus einem 1-Decen-Schwefeldioxid-Copolymer, einem C_{20/24}-Olefin-Maleinsäureimid-Copolymer. Dodecylbenzolsulfonsäure und Sovent Naphta Heavy

Die gleichen Komponenten (A), (B), (C) und (D) wurden in Analogie zur Rezeptur in Beispiel 4 in solchen Mengenverhältnissen gemischt, dass eine Additivformulierung der Zusammensetzung von 14 Gew.-% (A), 13 Gew.-% (B), 5 Gew.-% (C) und 68 Gew.-% (D) resultierte.

### Beispiel 7 (zum Vergleich): Herstellung einer Additivformulierung aus einem 1-Decen-Schwefeldioxid-Copolymer, einem N-Talgfettamin-1,3-diaminopropan-Epichlorhydrin-Umsetzungsprodukt, Dodecylbenzolsulfonsäure und Solvent Naphta Heavy

Eine in den Mengenverhältnissen der vier Komponenten zur Formulierung des Beispiels 6 analoge Formulierung wurde hergestellt mit dem einzigen Unterschied, dass anstelle der 50 gew.-%igen C_{20/24}-Olefin-Maleinsäureimid-Copolymer-Lösung die gleiche Menge einer kommerziell erhältlichen 50 gew.-%ige Lösung des polymeren Kondensationsproduktes aus N-Talgfettamin-1,3-diaminopropan und Epichlorhydrin in einem Gemisch aus aromatischen Kohlenwassserstoffen - gemäß der Lehre von Dokument (1) - eingesetzt wurde.

### Beispiel 8: Messung der Leitfähigkeiten der Additivformulierungen

Messungen der elektrischen Leitfähigkeit wurden gemäß DIN-Norm 51412-2 (Feldverfahren) durchgeführt. Dazu wurde eine Tauchmesszelle in die zu messenden Flüssigkeiten eingetaucht. Die Leitfähigkeitswerte in pS/m wurden jeweils bei der gleichen Temperatur der Flüssigkeiten, nämlich 25°C, auf der Anzeige der Tauchmesszelle abgelesen. Als zu messende Flüssigkeiten wurden handelsübliches Petroleum, handelsüblicher Dieselkraftstoff, handelsübliches Heizöl, handelsüblicher Turbinenkraftstoff und handelsübliches Hydrauliköl verwendet, in das zuvor jeweils eine bestimmte Menge der Additivformulierung als Leitfähigkeitsverbesserer eindosiert wurde. Die nachfolgende Übersicht zeigt die Ergebnisse der Messungen.
a) in handelsüblichem Petroleum (Dosiermenge: jeweils 3 mg pro Liter):
   die Additivformulierung aus Beispiel 5 (erfindungsgemäß) ergab 890 pS/m;
   die Additivformulierung aus Beispiel 6 (erfindungsgemäß) ergab 750 pS/m;
   die Additivformulierung aus Beispiel 7 (zum Vergleich) ergab 540 pS/m;
   eine handelsübliche Antistatik-Formulierung (AF1) ergab 760 pS/m;
b) in handelsüblichem Dieselkraftstoff (Dosiermenge: jeweils 3 mg pro Liter):
   die Additivformulierung aus Beispiel 5 (erfindungsgemäß) ergab 670 pS/m;
   die Additivformulierung aus Beispiel 6 (erfindungsgemäß) ergab 440 pS/m;
   eine handelsübliche Antistatik-Formulierung (AF1) ergab 415 pS/m;
c) in handelsüblichem Heizöl (Dosiermenge: jeweils 3 mg pro Liter):
   die Additivformulierung aus Beispiel 5 (erfindungsgemäß) ergab 690 pS/m;
   die Additivformulierung aus Beispiel 6 (erfindungsgemäß) ergab 520 pS/m;
   eine handelsübliche Antistatik-Formulierung (AF1) ergab 505 pS/m;
d) in handelsüblichem Turbinenkraftstoff (Dosiermenge: jeweils 1, 3 oder 5 mg pro Liter):
   die Additivformulierung aus Bespiel 5 (erfindungsgemäß) ergab bei 1 mg pro Liter 174 pS/m, bei 3 mg pro Liter 750 pS/m und bei 5 mg pro Liter 1275 pS/m; nach jeweils 4 Tagen Lagerzeit wurden die Leitfähigkeitsmessungen wiederholt und ergaben dabei Werte von 230 pS/m (bei 1 mg pro Liter), 735 pS/m (bei 3 mg pro Liter) und 1205 pS/m (bei 5 mg pro Liter);
   eine handelsübliche Antistatik-Formulierung (AF2) ergab bei 1 mg pro Liter 205 pS/m, bei 3 mg pro Liter 723 pS/m und bei 5 mg pro Liter 1230 pS/m; nach jeweils 4 Tagen Lagerzeit wurden die Leitfähigkeitsmessungen wiederholt und ergaben dabei Werte von 150 pS/m (bei 1 mg pro Liter), 677 pS/m (bei 3 mg pro Liter) und 1034 pS/m (bei 5 mg pro Liter);
e) in handelsüblichem Hydrauliköl (Dosiermenge: jeweils 130 mg pro Liter):
   die Additivformulierung aus Beispiel 5 (erfindungsgemäß) ergab 167 pS/m;
   eine handelsüblichen Antistatik-Formulierung (AF1) ergab 120 pS/m.

Für die handelsüblichen Antistatik-Formulierungen zur Verbesserung der elektrischen Leitfähigkeit in organischen Flüssigkeiten (AF1 und AF2) wird eine Zusammensetzung gemäß der Lehre von Dokument (1) angenommen.

Die Messresultate zeigen, das die erfindungsgemäßen Additivformulierungen den entsprechenden Additivformulierungen des Standes der Technik - im Rahmen der Meßgenauigkeit von erfahrungsgemäß ca. +10-20 pS/m - zumindest ebenbürtig sind; in den meisten Fällen übertreffen sie diese jedoch und liefern die gewünschten deutlich höheren elektrischen Leitfähigkeiten, insbesondere auch im direkten Vergleich mit dem Vergleichsbeispiel 7. Dies trifft auch auf das erfindungsgemäße Beispiel 6 zu, welches einen vergleichsweise hohen Anteil an Lösungsmittel (D) aufweist, also relativ stark verdünnt ist, aber trotzdem die ausreichend hohen elektrischen Leitfähigkeiten liefert, wie sie auch mit einer handelsüblichen Antistatik-Formulierung erreicht werden. Bei den Messungen im Turbinenkraftstoff ist als weiterer Vorteil der erfindungsgemäßen Additivformulierung anzumerken, dass auch nach einer gewissen Lagerzeit die elektrische Leitfähigkeit des Turbinenkraftstoffes konstant auf dem hohen Niveau verbleibt - im Gegensatz zum mit handelsüblicher Antistatik-Formulierung behandeltem Turbinenkraftstoff, dessen Leitfähigkeit nach besagter Lagerzeit deutlich abfällt.

### Beispiel 9: Untersuchung von Lagerstabilität und Flammpunkt von Additivformulierungen

Die Lagerstabilitäten der erfindungsgemäßen Additivformulierungen aus Beispiel 5 und 6 sowie von handelsüblichen Antistatik-Formulierungen (AF1 und AF2) wurden nach längerer Lagerzeit bei konstanten 40°C durch Sichtprüfung auf Trübung und eventuelle Niederschlagsbildung bewertet. In allen Fällen wiesen die Proben nach 3 Monaten Lagerzeit keine Trübungen oder Niederschläge auf. Die Flammpunkte der eingesetzten Proben waren vorher gemäß der EN ISO-Norm 2719:2002 (Messung im geschlossenen Tiegel nach Pensky-Martens) bestimmt worden: im Falle der erfindungsgemäßen Proben lagen diese bei 62°C(Beispiel 5) bzw. 63°C (Beispiel 6), bei den handelsüblichen Antistatik-Formulierung jedoch deutlich tiefer bei 21°C (AF1) bzw. <20°C (AF2).

## Patentansprüche

1. Additivformulierung, geeignet zur Antistatikausrüstung und Verbesserung der elektrischen Leitfähigkeit von unbelebtem organischen Material, bestehend aus
(A) 1 bis 50 Gew.-% eines Olefin-Schwefoldioxid-Copolymers,
(B) 1 bis 50 Gew.-% einer ein oder mehrere basische Stickstoffatome enthaltenden Verbindung, welche mindestens einen längerkettigen linearen oder verzweigten Kohlenwasserstoffrest mit mindestens 4 Kohlenstoffatomen oder ein äquivalentes Strukturelement, welches die Löslichkeit der Komponente (B) im unbelebten organischen Material gewährleistet, aufweist und ein α-Olefln-Maleinsäureimid-Copolymer mit mindestens einem basischen Stickstoffatom ist,
(C) 0,1 bis 30 Gew.-% einer öllöslichen Säure und
(D) 1 bis 80 Gew.-% eines hochsiedenden organischen Lösungsmittels, welches aus einer oder mehreren Molekülsorten besteht, wobei mindestens 80 Gew.-% dieser Molekülsorten einen Siedepunkt von mehr als 150°C bei Normaldruck aufweisen,
wobei die Summe aller Komponenten 100 Gew.-% ergibt.

2. Additivformulierung nach Anspruch 1, bestehend aus
(A) 10 bis 30 Gew.-% der Komponente (A),
(B) 10 bis 30 Gew.-% der Komponente (B),
(C) 2 bis 15 Gew.-% der Komponente (C) und
(D) 40 bis 78 Gew.-% der Komponente (D).

3. Additivformulierung nach Anspruch 1 oder 2, bei der die Komponente (A) ein Copolymer des Schwefeldioxids mit einem oder mehreren linearen oder verzweigten 1-Olefinen mit 2 bis 24 Kohlenstoffatomen ist.

4. Additivformulierung nach den Ansprüchen 1 bis 3, bei der die Komponente (A) ein zahlengemitteltes Molekulargewicht Mₙ von 2.000 bis 1.000.000 aufweist.

5. Additivformulierung nach den Ansprüchen 1 bis 4, bei der die Komponente (A) weniger als 15 mol-% nicht bei der Copolymerisation mit dem Schwefeldioxid umgesetztes Olefin enthält.

6. Additivformulierung nach den Ansprüchen 1 bis 5, bei der die Komponente (B) durch radikalische Polymerisation von einem oder mehreren linearen oder verzweigten α-Olefinen mit 6 bis 50 Kohlenstoffatomen mit Maleinsäureanhydrid und anschließende Umsetzung mit einem oder mehreren aliphatischen Polyaminen erhältlich ist.

7. Additivformulierung nach den Ansprüchen 1 bis 6, bei der die Komponente (B) ein gewichtsgemitteltes Molekulargewicht M_{w} von 500 bis 50.000 aufweist.

8. Additivformulierung nach den Ansprüchen 1 bis 7, bei der die Komponente (C) eine organische Sulfonsäure ist, welche einen Hydrocarbylrest mit 6 bis 40 Kohlenstoffatomen aufweist.

9. Additivformulierung nach den Ansprüchen 1 bis 8, bei der die Komponente (D) zu mindestens 80 Gew.-% aus einem hochsiedenden aromatischen Kohlenwasserstoff mit 9 bis 30 Kohlenstoffatomen oder einer Mischung aus solchen hochsiedenden aromatischen Kohlenwasserstoffen besteht.

10. Additivformulierung nach Anspruch 9, bei der die Komponente (D) eine Mischung aus hochsiedenden aromatischen Kohlenwasserstoffen mit 9 bis 20 Kohlenstoffatomen ist.

11. Verfahren zur Herstellung der Additivformulierung gemäß den Ansprüchen 1 bis 10, **dadurch gekennzeichnet dass** man zuerst in Gegenwart mindestens eines Teils des hochsiedenden organischen Lösungsmittels (D) die Komponenten (A) und (C) miteinander homogen vermischt und anschließend die Komponente (B) einarbeitet.

12. Verwendung der Additivformulierung gemäß den Ansprüchen 1 bis 10 zur Antistatikausrüstung und Verbesserung der elektrischen Leitfähigkeit von unbelebtem organischen Material und zur Verhinderung von elektrostatischer Aufladung bei chemischen und physikalischen Verfahren.

13. Verwendung nach Anspruch 12 zur Antistatikausrüstung und Verbesserung der elektrischen Leitfähigkeit von kosmetischen Präparaten, Arzneimittelformulierungen, photographische Aufzeichnungsmateriallen, Anstrichmitteln, Kunststoffen, Wachsen, Lösungsmitteln, Mineralölprodukten und Kraftstoffen.

14. Antistatisch ausgerüstetes unbelebtes organisches Material mit verbesserter elektrischer Leitfähigkeit, ausgewählt aus kosmetischen Präparaten, Arzneimittelformulierungen, photographische Aufzeichnungsmaterialien, Anstrichmitteln, Kunststoffen, Wachsen, Lösungsmitteln, Mineralölprodukten und Kraftstoffen, enthaltend 0,01 bis 2000 Gew.-ppm der Additivformulierung gemäß den Ansprüchen 1 bis 10.

## Claims

1. An additive formulation suitable for antistatic modification and improving the electrical conductivity of inanimate organic material, consisting of
(A) from 1 to 50% by weight of an olefin-sulfur dioxide copolymer,
(B) from 1 to 50% by weight of a compound which comprises one or more basic nitrogen atoms and has at least one relatively long-chain linear or branched hydrocarbon radical having at least four carbon atoms or an equivalent structural element which ensures the solubility of component (B) in the inanimate organic material and is an α-olefin-maleimide copolymer having at least one basic nitrogen atom,
(C) from 0.1 to 30% by weight of an oil-soluble acid and
(D) from 1 to 80% by weight of a high-boiling organic solvent which consists of one or more molecule types, where at least 80% by weight of these molecule types have a boiling point of more than 150°C at standard pressure,
where the sum of all components adds up to 100% by weight.

2. The additive formulation according to claim 1, consisting of
(A) from 10 to 30% by weight of component (A),
(B) from 10 to 30% by weight of component (B),
(C) from 2 to 15% by weight of component (C) and
(D) from 40 to 78% by weight of component (D).

3. The additive formulation according to claim 1 or 2, in which component (A) is a copolymer of sulfur dioxide with one or more linear or branched 1-olefins having from 2 to 24 carbon atoms.

4. The additive formulation according to claims 1 to 3, in which component (A) has a number-average molecular weight Mₙ of from 2000 to 1 000 000.

5. The additive formulation according to claims 1 to 4, in which component (A) comprises less than 15 mol% of olefin not converted in the copolymerization with the sulfur dioxide.

6. The additive formulation according to claims 1 to 5, in which component (B) is obtainable by free-radical polymerization of one or more linear or branched α-olefins having from 6 to 50 carbon atoms with maleic anhydride and subsequent reaction with one or more aliphatic polyamines.

7. The additive formulation according to claims 1 to 6, in which component (B) has a weight-average molecular weight M_{w} of from 500 to 50 000.

8. The additive formulation according to claims 1 to 7, in which component (C) is an organic sulfonic acid which has a hydrocarbyl radical having from 6 to 40 carbon atoms.

9. The additive formulation according to claims 1 to 8, in which component (D) consists to an extent of at least 80% by weight of a high-boiling aromatic hydrocarbon having from 9 to 30 carbon atoms or a mixture of such high-boiling aromatic hydrocarbons.

10. The additive formulation according to claim 9, in which component (D) is a mixture of high-boiling aromatic hydrocarbons having from 9 to 20 carbon atoms.

11. A process for preparing the additive formulation according to claims 1 to 10, which comprises first mixing components (A) and (C) homogeneously with one another in the presence of at least a portion of the high-boiling organic solvent (D), and then incorporating component (B).

12. The use of the additive formulation according to claims 1 to 10 for antistatic modification and improving the electrical conductivity of inanimate organic material and for preventing electrostatic charge in the course of chemical and physical processes.

13. The use according to claim 12 for antistatic modification and improving the electrical conductivity of cosmetic preparations, medicament formulations, photographic recording materials, paints and varnishes, plastics, waxes, solvents, mineral oil products and fuels.

14. Antistatically modified inanimate organic material having improved electrical conductivity, selected from cosmetic preparations, medicament formulations, photographic recording materials, paints and varnishes, plastics, waxes, solvents, mineral oil products and fuels, comprising from 0.01 to 2000 ppm by weight of the additive formulation according to claims 1 to 10.

## Revendications

1. Formulation d'additifs, appropriée pour l'apprêt antistatique et l'amélioration de la conductibilité électrique de matériau organique inanimé, constituée par
(A) 1 à 50% en poids d'un copolymère d'oléfine-dioxyde de soufre,
(B) 1 à 50% en poids d'un composé contenant un ou plusieurs atomes d'azote basiques, qui présente au moins un radical hydrocarboné linéaire ou ramifié à longue chaîne, comprenant au moins 4 atomes de carbone ou un élément de structure équivalent, qui garantit la solubilité du composant (B) dans le matériau organique inanimé, et qui est un copolymère d'α-oléfine-imide d'acide maléique avec au moins un atome d'azote basique,
(C) 0,1 à 30% en poids d'un acide soluble dans l'huile et
(D) 1 à 80% en poids d'un solvant organique à point d'ébullition élevé, qui est constitué par un ou plusieurs types de molécules, où au moins 80% en poids de ces types de molécules présentent un point d'ébullition supérieur à 150°C à la pression normale,
la somme de tous les composants valant de 100% en poids.

2. Formulation d'additifs selon la revendication 1, constituée par
(A) 10 à 30% en poids du composant (A),
(B) 10 à 30% en poids du composant (B),
(C) 2 à 15% en poids du composant (C) et
(D) 40 à 78% en poids du composant (D).

3. Formulation d'additifs selon la revendication 1 ou 2, dans laquelle le composant (A) est un copolymère du dioxyde de soufre avec une ou plusieurs 1-oléfines linéaires ou ramifiées comprenant 2 à 24 atomes de carbone.

4. Formulation d'additifs selon les revendications 1 à 3, dans laquelle le composant (A) présente un poids moléculaire numérique moyen Mₙ de 2000 à 1 000 000.

5. Formulation d'additifs selon les revendications 1 à 4, dans laquelle le composant (A) contient moins de 15% en mole d'oléfine non transformée avec le dioxyde de soufre lors de la copolymérisation.

6. Formulation d'additifs selon les revendications 1 à 5, dans laquelle le composant (B) peut être obtenu par polymérisation par voie radicalaire d'une ou de plusieurs α-oléfines linéaires ou ramifiées comprenant 6 à 50 atomes de carbone avec de l'anhydride de l'acide maléique et par transformation consécutive avec une ou plusieurs polyamines aliphatiques.

7. Formulation d'additifs selon les revendications 1 à 6, dans laquelle le composant (B) présente un poids moléculaire pondéral moyen M_{w} de 500 à 50 000.

8. Formulation d'additifs selon les revendications 1 à 7, dans laquelle le composant (C) est un acide sulfonique organique, qui présente un radical hydrocarbyle comprenant 6 à 40 atomes de carbone.

9. Formulation d'additifs selon les revendications 1 à 8, dans laquelle le composant (D) est constitué, à raison d'au moins 80% en poids d'un hydrocarbure aromatique à point d'ébullition élevé comprenant 9 à 30 atomes de carbone ou d'un mélange de ces hydrocarbures aromatiques à point d'ébullition élevé.

10. Formulation d'additifs selon la revendication 9, dans laquelle le composant (D) est un mélange d'hydrocarbures aromatiques à point d'ébullition élevé comprenant 9 à 20 atomes de carbone.

11. Procédé pour la préparation de la formulation d'additifs selon les revendications 1 à 10, **caractérisé en ce qu'**on mélange d'abord, en présence d'au moins une partie du solvant organique (D) à point d'ébullition élevé, les composants (A) et (C) l'un avec l'autre de manière homogène, puis on incorpore le composant (B).

12. Utilisation de la formulation d'additifs selon les revendications 1 à 10 pour l'apprêt antistatique et l'amélioration de la conductibilité électrique de matériau organique inanimé et pour empêcher la charge électrostatique lors de procédés chimiques et physiques.

13. Utilisation selon la revendication 12 pour l'apprêt antistatique et l'amélioration de la conductibilité électrique de préparations cosmétiques, de formulations de médicaments, de matériaux d'enregistrement photographique, de peintures, de matériaux synthétiques, de cires, de solvants, de produits à base d'huiles minérales et de carburants.

14. Matériau organique inanimé apprêté de manière antistatique présentant une conductibilité électrique améliorée, choisi parmi les préparations cosmétiques, les formulations de médicaments, les matériaux d'enregistrement photographique, les peintures, les matériaux synthétiques, les cires, les solvants, les produits à base d'huiles minérales et les carburants, contenant 0,01 à 2000 ppm en poids de la formulation d'additifs selon les revendications 1 à 10.
